(19) Europäisches Patentamt
European Patent Office
Office européen des brevets

(11) **EP 4 095 497 A1**

## (12) EUROPEAN PATENT APPLICATION
published in accordance with Art. 153(4) EPC

(43) Date of publication:
**30.11.2022 Bulletin 2022/48**

(21) Application number: **21745108.7**

(22) Date of filing: **18.01.2021**

(51) International Patent Classification (IPC):
**G01H 17/00** (2006.01)     **G01M 99/00** (2011.01)
**G01M 13/04** (2019.01)     **G01M 13/045** (2019.01)

(52) Cooperative Patent Classification (CPC):
**G01H 17/00; G01M 13/04; G01M 13/045; G01M 99/00**

(86) International application number:
**PCT/JP2021/001523**

(87) International publication number:
**WO 2021/149649 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.01.2020 JP 2020010301**
**24.01.2020 JP 2020010302**
**18.09.2020 JP 2020157210**

(71) Applicant: **NSK Ltd.**
**Tokyo 141-8560 (JP)**

(72) Inventors:
• **SAHARA, Juntaro**
**Fujisawa-shi, Kanagawa 251-8501 (JP)**
• **OSHIMA, Shunichi**
**Fujisawa-shi, Kanagawa 251-8501 (JP)**

(74) Representative: **Global IP Europe Patentanwaltskanzlei**
**Pfarrstraße 14**
**80538 München (DE)**

(54) **NOISE CANCELLER, ABNORMALITY DIAGNOSIS DEVICE, AND NOISE CANCELLATION METHOD**

(57)     A noise canceler includes a signal obtaining unit that obtains an observation signal obtained by sampling vibration of an apparatus; a signal delay unit that obtains a delay signal by delaying the observation signal obtained by the signal obtaining unit; and a Kalman filter processing unit that applies, to the observation signal and the delay signal, a Kalman filter that adapts a filter coefficient so as to reduce a residual signal between the observation signal and an estimated signal estimated based on the observation signal and the delay signal by an adaptive filter that incorporates the Kalman filter, and outputs the residual signal.

FIG. 4

**Description**

TECHNICAL FIELD

The present invention relates to a noise canceler, an abnormality diagnosis apparatus, and a noise canceling method.

BACKGROUND ART

Conventionally, a diagnosis apparatus for diagnosing an abnormality or the like in a bearing in a rotation apparatus has been proposed.

For example, Patent Literature Document 1 discloses noise removal processing that is performed by using an adaptive filter in acoustic diagnosis using a microphone. An LMS (least mean square) algorithm is used as the adaptive filter.

For example, Patent Literature Document 2 discloses abnormality diagnosis in a rolling mill. In this abnormality diagnosis, an elastic wave is measured by an AE sensor in a no-load state using a press-down signal and a rotation signal, and an abnormality in a shaft and a bearing is diagnosed.

For example, Patent Literature Document 3 solves the problem that, in abnormality diagnosis of a railway vehicle, it is not possible to distinguish whether abnormal vibration is due to a flat spot in a wheel or due to an axle bearing, or whether it is due to the railroad track or another abnormality.

For example, Patent Literature Document 4 discloses an adaptive filter or an optimum filter that is used in abnormality diagnosis of a rolling apparatus.

LISTING OF REFERENCES

PATENT LITERATURE DOCUMENTS

Patent Literature Document 1: Japanese Patent Application Laid-Open No. H11-271181
Patent Literature Document 2: Japanese Patent Application Laid-Open No. 2010-234403
Patent Literature Document 3: Japanese Patent Application Laid-Open No. 2007-278894
Patent Literature Document 4: Japanese Patent Application Laid-Open No. 2008-164578

SUMMARY OF THE INVENTION

PROBLEMS TO BE SOLVED BY THE INVENTION

From the viewpoint of production efficiency, it is desirable to perform diagnosis during the operation of the rotation apparatus, but in a machine that requires abnormality diagnosis for a bearing or the like, a large amount of noise may be constantly generated depending on the operation environment. Such noise includes, for example, vibration from another machine, vibration from gears and road surfaces, vibration from an engine and a motor, vibration and sound generated from a cutting tool, a grindstone, and a workpiece in machining equipment, and noise from an ore crusher in a mining machine. Such noise and vibration may have strong unsteadiness.

With the techniques of Patent Literature Documents 1 to 4, it may be difficult to obtain a signal according to which abnormality diagnosis is possible in an operation state where the above-mentioned large amount of noise is generated.

In view of this, an object of the present invention is to provide a technique by which it is possible to accurately perform abnormality diagnosis even in an operation state where a large amount of noise is generated.

SOLUTION TO THE PROBLEMS

In order to solve the above-described problems, a noise canceler according to a first aspect of the present invention includes: a signal obtaining unit configured to obtain an observation signal obtained by sampling vibration of an apparatus; a signal delay unit configured to obtain a delay signal by delaying the observation signal obtained by the signal obtaining unit; and a Kalman filter processing unit configured to apply, to the observation signal and the delay signal, a Kalman filter that adapts a filter coefficient so as to reduce a residual signal between the observation signal and an estimated signal estimated based on the observation signal and the delay signal using an adaptive filter, and to output the residual signal.

According to this noise canceler, a weak signal that is necessary for abnormality diagnosis and is buried in a large amount of noise is extracted to a desired signal as an error (residual) between an observation signal and an estimated signal.

The noise canceler preferably includes a band-limiting unit configured to band-limit the observation signal and the delay signal from a lower limit frequency that removes a direct current signal component, to an upper limit frequency set to half or less of a sampling frequency. The Kalman filter serving as the adaptive filter works effectively by band-limiting the observation signal and the delay signal.

The noise canceler preferably further includes a down-conversion unit configured to convert the frequency of a signal band-limited by the band-limiting unit to a low frequency. By converting the frequency of the signal to a low band, the amount of calculation in the Kalman filter processing unit is reduced, and real-time operation is possible even with an inexpensive device such as an embedded computer.

In the noise canceler, it is preferable that the down-conversion unit realizes down-conversion by performing complex multiplication between an input signal and a periodic signal having a frequency that corresponds to a conversion amount. Down-conversion is easily realized through complex multiplication.

In the noise canceler, it is preferable that the down-conversion unit performs complex multiplication using pre-stored numerical value data that corresponds to the periodic signal. By using the pre-stored numerical value data, the amount of calculation can be further reduced.

The noise canceler preferably includes an FFT processing unit configured to implement envelope FFT processing on the residual signal output from the Kalman filter processing unit. By implementing the envelope FFT processing on the residual signal, it is easy to confirm a signal having a characteristic frequency accompanying an abnormality in the apparatus.

It is preferable that the Kalman filter processing unit uses the filter coefficient as a state vector and uses an identity matrix as a state transition matrix. When the identity matrix is used as the transition matrix, the calculation structure in the filter is simplified.

It is preferable that the Kalman filter processing unit uses a variance matrix of system noise and a variance of observed noise in the Kalman filter as time-varying parameters and estimates the variance matrix and the variance in parallel with the adaptation of the filter coefficient. Due to the variance matrix and the variance being estimated as time-varying parameters, the variance matrix and the variance naturally converge or transition to appropriate parameter values, and therefore the trouble of adjusting the parameter values is eliminated.

An abnormality diagnosis apparatus according to a second aspect of the present invention includes: the above-described noise canceler; and a diagnosis unit for diagnosing whether or not there is an abnormality in the apparatus using the residual signal obtained by the noise canceler.

According to this abnormality diagnosis apparatus, a weak signal necessary for abnormality diagnosis is taken out from noise by the noise canceler, and therefore highly-accurate diagnosis becomes possible.

A noise canceling method according to a third aspect of the present invention includes: a signal obtaining step of obtaining an observation signal obtained by sampling vibration of an apparatus; a signal delay step of obtaining a delay signal by delaying the observation signal obtained by the signal obtaining step; and a Kalman filter processing step of applying, to the observation signal and the delay signal, a Kalman filter that adapts a filter coefficient so as to reduce a residual signal between the observation signal and an estimated signal estimated based on the observation signal and the delay signal using an adaptive filter, and outputting the residual signal.

For example, the noise canceler is a noise canceler using one sensor (using the input of one sensor), the abnormality diagnosis apparatus is an abnormality diagnosis apparatus including a noise canceler using one sensor, and the noise canceling method is a noise canceling method using one sensor. This is an application of an adaptive line enhancer (ALE). Since the delay signal plays a role of eliminating the correlation between the observation signal and an irregular signal component, the irregular component serving as an error (residual) with respect to the periodic signal component obtained from the adaptive line enhancer (ALE) can be regarded as the vibration of a rolling bearing.

In this manner, if the periodic signal component is estimated using the adaptive line enhancer (ALE), the vibration of the rolling bearing is extracted as an error (residual).

Also, if the noise canceler is used to measure vibration from railroad seams, vibration from road seams, irregular vibration from an ore crushing machine, or the like, it is preferable to use a Kalman filter or an NLMS as an adaptive filter and combine a Fourier analyzer. If the vibration to be measured is unsteady vibration, it includes a waveform that decays in a short time even if a very large amplitude is generated, but for example, by adjusting the basic parameters of the normalized LMS, a noise canceler that uses the input of one sensor can be configured as described above. The Kalman filter converges quickly and can quickly and accurately follow time-varying signals and noise.

According to this noise canceler, abnormality diagnosis apparatus, and noise canceling method, a weak signal that is necessary for abnormality diagnosis and is buried in a large amount of noise is extracted to a desired signal as an error (residual) between the observation signal and the estimated signal.

The noise canceler according to the fourth aspect of the present invention includes: a signal obtaining unit configured to obtain measurement signals obtained by sampling vibration at a plurality of locations that are side by side in a direction along a rotation axis of a rotation apparatus, at a distance from each other in the direction; a band-limiting unit configured to band-limit the measurement signals obtained by the signal obtaining unit, from a lower limit frequency that removes a direct current signal component, to an upper limit frequency set to half or less of a sampling frequency; and an adaptive filter processing unit configured obtain an estimated signal by applying an adaptive filter to an observation signal that is one of the measured signals band-limited by the band-limiting unit and a reference signal that is another one of the measured signals, adapt a filter coefficient of the adaptive filter so as to reduce a residual signal between the observation signal and the estimated signal, and output the residual signal.

The noise canceler may further include an FFT processing unit configured to implement envelope FFT processing on the residual signal output from the adaptive filter processing unit.

The adaptive filter processing unit may use a Kalman filter as the adaptive filter.

The Kalman filter may use the filter coefficient as a state vector and use an identity matrix as a state transition matrix.

The adaptive filter processing unit may use a variance matrix of system noise and a variance of observed noise in the Kalman filter as time-varying parameters and estimate the variance matrix and the variance in parallel with the adaptation of the filter coefficient.

The adaptive filter processing unit may use a normalized LMS as the adaptive filter.

An abnormality determination apparatus according to a fifth aspect of the present invention includes: the noise canceler according to the fourth aspect described above; and a diagnosis unit configured to diagnose whether or not there is an abnormality in the rotation apparatus using the residual signal obtained by the noise canceler.

A noise canceling method according to the sixth aspect of the present invention includes: a signal obtaining step of obtaining measurement signals obtained by sampling vibration at a plurality of locations that are side by side in a direction along a rotation axis of a rotation apparatus, at a distance from each other in the direction; a band-limiting step of band-limiting the measurement signals obtained in the signal obtaining step, from a lower limit frequency that removes a direct current signal component, to an upper limit frequency set to half or less of a sampling frequency; and an adaptive filter processing step of obtaining an estimation signal by applying an adaptive filter to an observation signal that is one of the measured signals band-limited in the band-limiting step and a reference signal that is another one of the measured signals, adapt a filter coefficient of the adaptive filter so as to reduce a residual signal between the observation signal and the estimation signal, and output the residual signal.

ADVANTAGEOUS EFFECTS OF THE INVENTION

According to the noise canceler, the abnormality diagnosis apparatus, and the noise canceling method of the present invention, abnormality diagnosis can be performed more accurately even in an operation state where a large amount of noise is generated.

BRIEF DESCRIPTION OF THE DRAWINGS

Fig. 1A is a plan view schematically showing a truck (railway bogie), which is a target of abnormality diagnosis, and a rail.
Fig. 1B is a side view schematically showing the truck and the rail of Fig. 1A.
Fig. 1C is a diagram showing a configuration of an abnormality diagnosis apparatus according to a first embodiment.
Fig. 2 is a diagram showing a structure of a noise canceler.
Fig. 3 is a diagram showing a processing concept of an adaptive filter.
Fig. 4 is a diagram showing a configuration concept in which a Kalman filter is used as an adaptive filter.
Fig. 5 is a flowchart showing a procedure of noise canceling.
Fig. 6 is a flowchart showing a procedure of a comparative example.
Fig. 7A is a diagram showing an observation signal in the abnormality diagnosis apparatus of the first embodiment.
Fig. 7B is a diagram showing a residual signal in the abnormality diagnosis apparatus of the first embodiment.
Fig. 8A is a diagram showing a spectral signal of an observation signal obtained by an abnormality diagnosis apparatus.
Fig. 8B is a diagram showing a spectral signal of a residual signal obtained by an abnormality diagnosis apparatus.
Fig. 9 is a diagram showing another application example of the abnormality diagnosis apparatus shown in Fig. 1C.
Fig. 10 is a diagram showing a dump truck in which an abnormality diagnosis apparatus of a second embodiment is incorporated.

Fig. 11 is a diagram showing the abnormality diagnosis apparatus incorporated in the dump truck shown in Fig. 10.

Fig. 12 is a flowchart showing a procedure of abnormality diagnosis in the abnormality diagnosis apparatus shown in Fig. 11.

Fig. 13 is a flowchart showing a processing procedure of an abnormality determination apparatus of a third embodiment.

Fig. 14A is a graph of an observation signal, and Fig. 14B is a graph schematically showing operation of a band-pass filter.

Fig. 15A is a graph schematically showing operation of frequency down-conversion, and Fig. 15B is a graph schematically showing operation of frequency down-conversion.

Fig. 16 is a diagram showing a processing concept of down-conversion performed through complex multiplication.

Fig. 17A is a diagram showing a processing concept of down-conversion using a numerical table.

Fig. 17B is a diagram showing a numerical table used in the down-conversion of Fig. 17A.

Fig. 18A is a plan view schematically showing a railway bogie, which is a target of abnormality diagnosis, and a rail.

Fig. 18B is a diagram showing a configuration of an abnormality diagnosis apparatus according to a fourth embodiment.

Fig. 19 is a diagram showing a structure of a noise canceler.

Fig. 20 is a diagram showing a processing concept of an adaptive filter.

Fig. 21 is a diagram showing a configuration concept of an adaptive filter using a Kalman filter.

Fig. 22 is a flowchart showing a procedure of noise canceling.

Fig. 23 is a flowchart showing a procedure in a comparative example.

Fig. 24A is a diagram showing a reference signal in the abnormality diagnosis apparatus of Fig. 18B.

Fig. 24B is a diagram showing an observation signal in the abnormality diagnosis apparatus of Fig. 18B.

Fig. 24C is a diagram showing a residual signal in the abnormality diagnosis apparatus of Fig. 18B.

Fig. 25A is a diagram showing a spectral signal of an observation signal obtained by the abnormality diagnosis apparatus of Fig. 18B.

Fig. 25B is a diagram showing a spectral signal of a residual signal obtained by the abnormality diagnosis apparatus of Fig. 18B.

Fig. 26 is a flowchart showing a procedure of noise canceling in a fifth embodiment.

Fig. 27A is a diagram showing a spectral signal obtained in a comparative example.

Fig. 27B is a diagram showing a spectral signal obtained in the fifth embodiment.

Fig. 28 is a diagram showing another application example of the abnormality diagnosis apparatus shown in Fig. 18B.

Fig. 29 is a diagram showing an abnormality diagnosis apparatus according to a sixth embodiment.

Fig. 30 is a flowchart showing a procedure of abnormality diagnosis in the abnormality diagnosis apparatus shown in Fig. 29.

## DESCRIPTION OF EMBODIMENTS

Hereinafter, embodiments of the present invention will be described with reference to the drawings.

First Embodiment

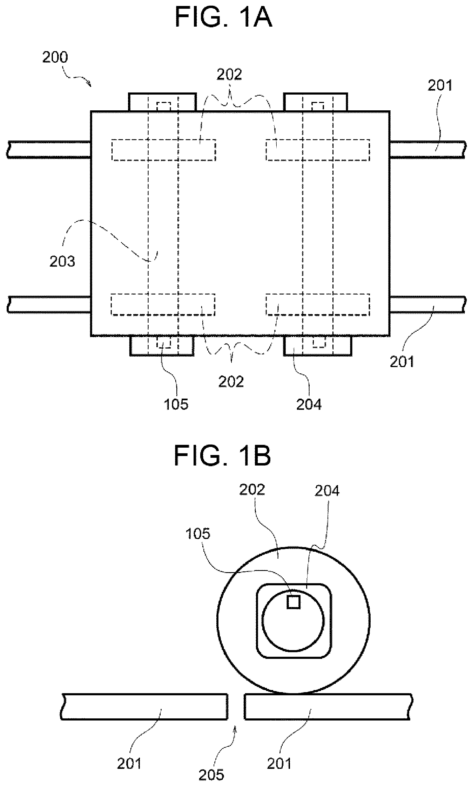

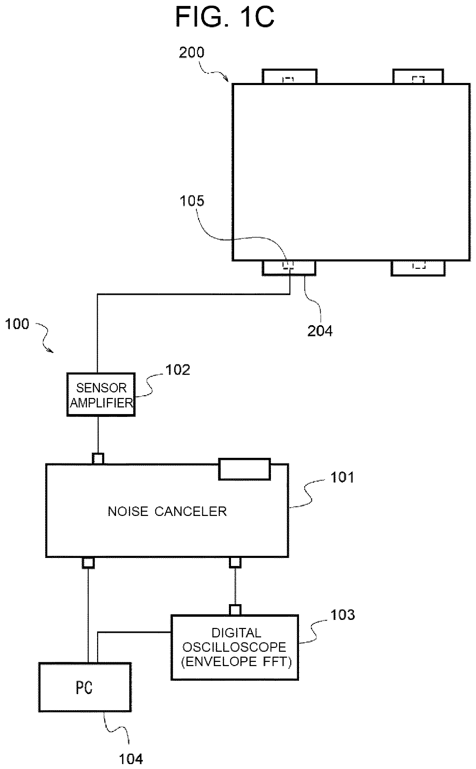

Figs. 1A, 1B, and 1C are diagrams illustrating a first embodiment of an abnormality diagnostic apparatus of the present invention. Fig. 1A schematically shows a plan view of a truck (railway bogie) 200 for a railroad vehicle, which is the target of abnormality diagnosis in this embodiment, and a rail 201. Fig. 1B schematically shows a side view of a wheel 202 of the truck 200 and the rail 201. Fig. 1C shows a configuration of an abnormality diagnosis apparatus 100.

The abnormality diagnosis apparatus 100 of this embodiment is a device for performing abnormality diagnosis on a bearing unit 204 in the truck 200.

The truck 200 has, for example, four wheels 202, carries the main body of the railroad vehicle, and travels on the rail 201. Each wheel 202 rolls on the rail 201 without slipping and rotates around an axle 203. Each axle 203 connects two wheels 202, and the wheels 202 are fixed to the axle 203. The truck 200 has a bearing unit 204, which includes double-row tapered roller bearings (not shown) at locations corresponding to each wheel 202. The double-row tapered roller bearings rotatably hold the axles 203. Each bearing unit 204 is equipped with a vibration acceleration sensor 105 that detects vibration acceleration in a direction perpendicular to the outer circumferential surface of the bearing.

The vibration acceleration sensor 105 is arranged at a position suitable for detecting the vibration generated in the bearing accompanying a defect such as a scratch when such a defect occurs in the bearing, and for example, shock vibration that occurs when the wheel 202 passes a seam 205 of the rail 201 enters the vibration acceleration sensor 105 as a large amount of noise.

The abnormality diagnosis apparatus 100 includes a vibration acceleration sensor 105 as shown in Fig. 1C. It should be noted that the abnormality diagnosis apparatus according to this embodiment may be a device that does not have the vibration acceleration sensor 105 and obtains an observation signal obtained by such a sensor, for example, as recorded data.

The abnormality diagnosis apparatus 100 further includes a noise canceler 101, a sensor amplifier 102, a digital oscilloscope 103, and a personal computer 104.

The sensor amplifier 102 amplifies a signal of the vibration detected by the vibration acceleration sensor 105 and outputs the result to the noise canceler 101.

The noise canceler 101 obtains a vibration signal (observation signal from the vibration acceleration sensor 105) from the sensor amplifier 102, and cancels the noise through filter processing, which will be described in detail later. The noise canceler 101 corresponds to an embodiment of the noise canceler of the present invention.

The digital oscilloscope 103 has an envelope FFT processing function, and performs envelope FFT processing on a signal in which noise has been canceled by the noise canceler 101. The envelope FFT processing carried out by the digital oscilloscope 103 corresponds to the function of the FFT processing unit according to the embodiment of the present invention, and the combination of the noise canceler 101 and the digital oscilloscope 103 also corresponds to one embodiment of the noise canceler of the present invention.

The personal computer 104 performs abnormality diagnosis of the bearing unit 204 using the signal subjected to envelope FFT processing. The personal computer 104 has a display.

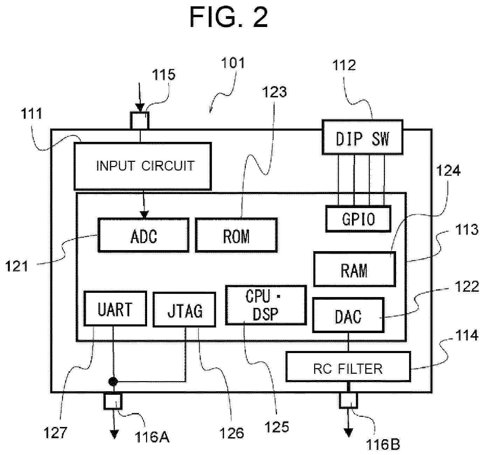

Fig. 2 is a diagram showing a structure of the noise canceler 101.

The noise canceler 101 includes an input circuit 111, a DIP switch 112, a one-chip microcomputer 113, an RC filter 114, a BNC connector 115 for input, and BNC connectors 116A and 116B for output.

The input circuit 111 includes an input buffer, a low-pass RC filter, and the like, obtains an observation signal via the BNC connector 115 for input, and outputs the observation signal to the one-chip microcomputer 113. The signal obtaining unit in this embodiment of the present invention corresponds to, for example, the BNC connector 115, the input circuit 111, and an AD converter (ADC) 121 with a built-in one-chip microcomputer.

The DIP switch 112 includes, for example, a 3-bit switch for selecting a band of a band-pass filter that narrows the band of a signal input to the adaptive filter. The DIP switch 112 also includes a 1-bit switch that switches between a case where a plurality of observation signals obtained from a plurality of vibration acceleration sensors 105 are used and a case where one observation signal obtained from one vibration acceleration sensor 105 is used. However, in this embodiment, the observation signal will be described as being a signal obtained from one vibration acceleration sensor 105.

The RC filter 114 mitigates a case in which the output signal becomes a stepped shape and prevents electrical disturbance noise from being mixed in. The output signal from the noise canceler 101 is output via the RC filter 114 and the BNC connectors 116A and 116B for output.

The one-chip microcomputer 113 implements filter processing through so-called digital signal processing on the observation signal input from the input circuit 111, and generates an output signal in which noise has been canceled. The one-chip microcomputer 113 includes an AD converter 121, a DA converter (DAC) 122, a ROM 123, a RAM 124, and a processor 125, which is a CPU or DSP. The one-chip microcomputer 113 also has a JTAG 126 and a UART 127 as input/output interfaces. The UART 127 is used, for example, for reading out a signal record before FFT processing and the like, and the JTAG 126 is used, for example, for rewriting a program and the like, but detailed description thereof will be omitted.

The AD converter 121 converts an analog observation signal into a digital signal, and the DA converter 122 converts the processed digital signal into an analog signal.

The ROM 123 stores programs to be executed by the processor 125 and constants, and the RAM 124 stores the values of variables to be used by the processor 125 in program execution.

The processor 125 performs filtering processing through digital processing. As the filter processing, processing of a high-pass filter, a low-pass filter, and an adaptive filter is performed.

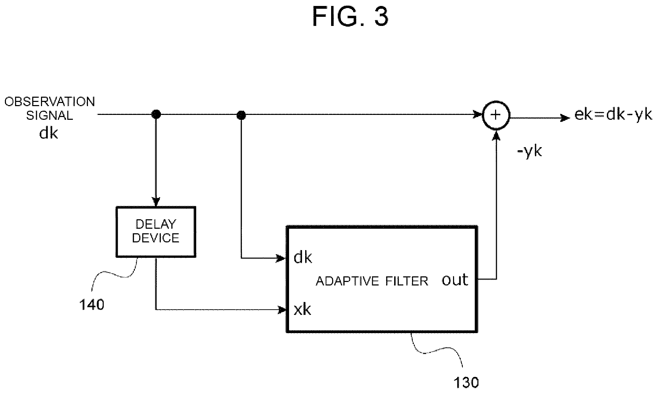

Here, a processing concept of the adaptive filter will be described with reference to Fig. 3.

An adaptive filter 130 is a filter that estimates a noise signal yk, which is a noise component in an observation signal dk, based on the observation signal dk and a delay signal xk of the observation signal dk. The observation signal dk is, for example, a signal in which the noise signal yk is mixed with a desired signal sk (not shown) representing vibration accompanying a defect in the bearing unit 204.

In this embodiment, the signal obtained from the vibration acceleration sensor 105 is used as the observation signal dk, and the signal obtained by delaying the observation signal using a delay device 140 is used as the delay signal xk. The role of the delay device 140 is played by a storage device (RAM 124) incorporated in the one-chip microcomputer 113, and the delay device 140 is subjected to software processing. This storage device (memory) is an example of the signal delay unit of the present invention, and due to a signal being stored, the past signal remains in the present, whereby a delay is obtained. The data length of the delay signal to be stored is determined by the number of delays and the order of the filter. A data matrix including the data length is updated using the observation signal obtained every hour. The update of this data matrix is performed by manipulating the data in the memory using the processor 125, but the details thereof are omitted here. The correlation between the sinusoidal noise components included in the observation signal dk and the delay signal xk is high, and the irregular vibration signal component of the bearing unit 204 does not correlate with the observation signal dk and the delay signal xk.

The adaptive filter 130 estimates a sinusoidal noise signal yk based on the observation signal dk and the delay signal xk, which is the delay of the observation signal dk. As a result, a residual signal ek = dk-yk obtained by subtracting the noise signal yk from the observation signal dk is extracted as a signal component corresponding to the desired signal sk. In this embodiment, the estimated signal indicates a sinusoidal noise signal yk estimated by the adaptive filter.

In this embodiment, a Kalman filter is adopted as the adaptive filter 130, and in the Kalman filter, the noise signal yk is estimated by estimating a filter coefficient of the adaptive filter 130 described below.

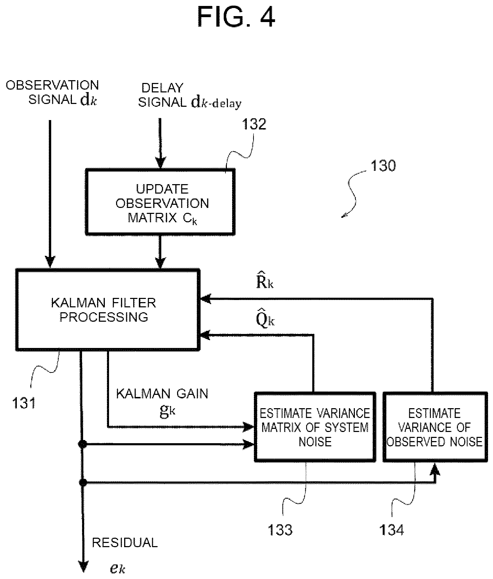

Fig. 4 is a diagram showing a configuration concept of the adaptive filter 130.

The adaptive filter 130 in this embodiment includes a Kalman filter processing unit 131 and time-varying elements. The time-varying elements include an update unit 132 that updates an observation matrix cTk, a first estimation unit 133 that estimates a variance matrix Qk of system noise, and a second estimation unit 134 that estimates a variance Rk of observed noise.

The observation matrix cTk is a definite matrix based on a delay signal dk-delay serving as the delay signal xk obtained with the elapse of time, and is expressed by the following equation (1). Here, xk = dk-delay.

$$c^{T}_{k} = \{ \, x_{k-1,\,...,\,} x_{k-N} \} \qquad \cdot \cdot \cdot (1)$$

The data length of the observation matrix is N, but in actuality, it is also necessary to store the delay of the observation signal.

In the adaptive filter 130, it is assumed that the noise signal yk is expressed by the following equation (2).

$$y_{k} = \sum_{i=1}^{N} h_{i} \mathrm{x}_{k-i} = c^{T}_{k} h_{k} \qquad \cdot \cdot \cdot (2)$$

Here, the order (number of taps) N of the filter is, for example, 6.

Equation (2) shows that the noise signal yk is estimated by a linear combination of the delay signals xk-1, xk-2, ..., xk-N, which are past signals.

A sine wave can be estimated using equation (2).

Next, a state space model, which is a basic model of a Kalman filter, is set. The change over time of the filter coefficient hk is expressed by the following equation (3). However, in this embodiment, an identity matrix is used as the transition matrix, which simplifies the calculation structure in the Kalman filter processing unit 131. Equation (3) is an equation of state, and the filter coefficient hk can be changed over time in a system model according to equation (3), and unsteady signals and noise can be estimated through estimation with the Kalman filter.

$$h_{k+1} = h_{k} + w_{k} \qquad \cdot \cdot \cdot (3)$$

Here, wk represents system noise, which is Gaussian white noise with an average of zero. Next, an observation equation is expressed by the following equation (4). The observation matrix cTk shown in equation (1) is updated every hour as shown in equation (1).

$$d_{k} = c^{T}_{k} h_{k} + v_{k} \qquad \cdot \cdot \cdot (4)$$

Here, dk indicates the observed value. vk is observed noise, which is Gaussian white noise with an average of zero. The state space model is set by equations (3) and (4). hk is a filter coefficient, which is a state vector to be sequentially estimated by the Kalman filter. Next, according to the following equation (5), a variance matrix Qk is expressed by the system noise wk of equation (3). Also, according to the following equation (6), the variance Rk is expressed by the observed noise vk in equation (4).

$$Q_k = E\{w_k \cdot w_k^T\} \qquad \cdots (5)$$

$$R_k = E\{v_k^2\} \qquad \cdots (6)$$

The variance matrix Qk of the system noise and the variance Rk of the observed noise serve as adjustment parameters in the Kalman filter that estimates the filter coefficient hk.

In the Kalman filter processing unit 131, the filter coefficient hk is estimated as a state estimation value h (with ^)k through the prediction step and the filtering step. In the prediction step, a preliminary state estimated value h (with ^) -k and a preliminary error covariance matrix P-k are calculated by the following equations (7) and (8) with the transition matrix as an identity matrix.

$$\hat{h}_k^- = \hat{h}_{k-1} \qquad \cdots (7)$$

$$P_k^- = P_{k-1} + Q_k \qquad \cdots (8)$$

Then, in the filtering step, the Kalman gain gk, the state estimation value h (with ^) k, and a subsequent error covariance matrix Pk are calculated by the following equations (9), (10), and (11).

$$g_k = \frac{P_k^- c_k}{c_k^T P_k^- c_k + R_k} \qquad \cdots (9)$$

$$\hat{h}_k = \hat{h}_k^- + g_k (d_k - c_k^T \hat{h}_k^-) \qquad \cdots (10)$$

$$P_k = (I - g_k c_k^T) P_k^- \qquad \cdots (11)$$

As a result of estimating the filter coefficient hk by such a step, in the Kalman filter processing unit 131, as shown in equation (14) below, the residual signal ek = dk-cTkh (with ^) k is calculated and output as the estimated value of the desired signal sk (bearing vibration). Note that dk-cTkh (with ^) -k in the parentheses of the second term on the right side of equation (10) indicates the preliminary output estimation error, and this preliminary output estimation error may be used as a desired signal to replace the residual signal ek.

In this embodiment, the time-varying parameters Qk and Rk are used as the variance matrix of the system noise and the variance of the observed noise, and sequential estimation thereof is performed by the first estimation unit 133 and the second estimation unit 134. The variance matrix Qk of the system noise wk and the variance Rk of the observed noise vk that are used in the Kalman filter may also be used as adjustment parameters. It is more preferable that the variance matrix Qk and the variance Rk are used in a certain range for noise cancelation.

Fixed values Q and R may be used instead of the time-varying parameters Qk and Rk as the variance matrix of the system noise and the variance of the observed noise, but when the time-varying parameters Qk and Rk are used, the variance matrix of the system noise and the variance of the observed noise naturally change or converge to appropriate values together with the estimation of the filter coefficient hk. Accordingly, it is desirable that the time-varying parameters Qk and Rk are used as the variance matrix of the system noise and the variance of the observed noise. Alternatively, after the time-varying parameters Qk and Rk have changed or converged to appropriate values, the parameter values may be fixed for the purpose of reducing the amount of calculation and the like.

In the first estimation unit 133, the variance matrix Q (with ^) k of the system noise is estimated by the following equation (12), and in the second estimation unit 134, the variance R (with ^) k of the observed noise is estimated by the following equation (13). The coefficient $\alpha$ is a fixed value within the range of $0 < \alpha < 1$, the residual signal ek is a value calculated by the following equation (14), and based on these values, each of the variance matrix Q (with ^) k and the variance R (with ^) k is estimated.

$$\hat{Q}_k = \alpha \cdot \hat{Q}_{k-1} + (1-\alpha) \cdot \mathrm{diag}\left\{ [\,\hat{h}_k - \hat{h}_k^-]^2 \right\}$$
$$= \alpha \cdot \hat{Q}_{k-1} + (1-\alpha) \cdot \mathrm{diag}\left\{ [g_k \cdot e_k]^2 \right\} \qquad \cdots (1\,2)$$

$$\hat{R}_k = \alpha \cdot \hat{R}_{k-1} + (1-\alpha) \cdot e_k^2 \qquad \cdots (1\,3)$$

$$e_k = d_k - c_k^T \hat{h}_k \qquad \cdots (1\,4)$$

In the algorithm using equations (1) to (14), appropriate initial values are set for P0, h (with ^) -0, Q (with ^) 0, and R (with ^) 0, whereby, in addition to the filter coefficient h (with ^) k, Q (with ^) k and R (with ^) k are automatically adjusted by only the input of the observation signal dk obtained from the vibration acceleration sensor 105, and a residual signal ek from which noise has been appropriately removed is output. Since the observation matrix constituted by the delay signal and its vector is generated based on the observation signal, the signal input of the vibration acceleration sensor 105 may be only the observation signal.

Next, a specific procedure of noise cancelation in one embodiment of the noise canceler of the present invention, which is a combination of the noise canceler 101 and the digital oscilloscope 103 shown in Fig. 2, will be described with reference to a flowchart.

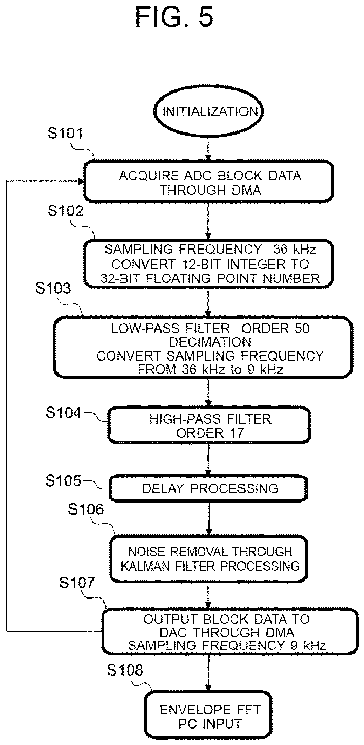

Fig. 5 is a flowchart showing the noise canceling procedure.

The procedure shown in the flowchart of Fig. 5 corresponds to one embodiment of the noise canceling method of the present invention. Hereinafter, in the description of the flowchart of Fig. 5, Figs. 1 and 2 are referred to as appropriate.

The procedure of Fig. 5 starts from the initialization of the one-chip microcomputer 113 and the like performed by turning on the power, for example.

In step S101, the observation signal dk, which is a measurement signal, is converted via the input circuit 111 and the AD converter 121, and the converted observation signal dk is acquired in the RAM 124 as block data through DMA. The sampling frequency of the AD converter 121 is, for example, 36 kHz.

In step S102, a 12-bit integer with a sampling frequency of 36 kHz is converted to a 32-bit floating point number.

In step S103, the processor 125 performs high-speed calculation of processing of a 50th-order FIR low-pass filter (gain 1 at 2.5 kHz or less) in order to remove a frequency band of 4.5 kHz or more (i.e., in order to obtain a gain of -50 dB or less). At the same time as this filter processing, the sampling frequency is decimated by one-fourth, from 36 kHz to 9 kHz.

In step S104, the processor 125 further applies 17th-order high-pass filter processing to the observation signal dk down-sampled to 9 kHz.

Since the observation signal dk is band-limited by the low-pass filter processing in step S103 and the high-pass filter processing in step S104, the number of sine waves, which are periodic noise to be estimated by the adaptive line enhancer that is the noise canceler, is narrowed down in the observation signal dk. The specific band in the low-pass filter processing and the high-pass filter processing needs to be adjusted to some extent according to the type of the target apparatus for which the abnormality diagnosis is performed, the driving condition, and the like. Since this adjustment can be handled by manual adjustment using the DIP switch 112, detailed description thereof will be omitted here. The processing in which step S103 and step S104 are combined corresponds to an example of the processing performed by the band-limiting unit according to the present invention. The band-limiting unit according to the present invention may limit the band through so-called band-pass filter processing.

Based on the observation signal dk that has been band-limited in this manner, in step S105, a delay signal xk for the observation signal dk is generated.

In step S106, the observation signal dk that has been subjected to the processing of step S104 and the delay signal xk are the inputs of the adaptive filter 130. In step S106, Kalman filter processing, which is the internal structure of the adaptive filter 130, is executed. Then, the residual signal ek is output as a signal from which noise has been removed.

In step S107, the residual signal ek is sent as block data to the DA converter 122 through DMA, and is converted into an analog residual signal ek at a sampling frequency of 9 kHz.

The processing of steps S101 to S107 is repeatedly executed while the observation signal dk is obtained as a measurement signal. While steps S101 to S107 are repeatedly executed, the residual signal ek converted by the DA converter 122 is subjected to envelope FFT processing by the digital oscilloscope 103 in step S108, and becomes a spectral signal used for diagnosis. Then, the spectral signal that is the processing result is output from the digital oscilloscope 103 to the personal computer 104 and is used for abnormality diagnosis. In general abnormality diagnosis as in Patent Literature Document 3, abnormality diagnosis is performed by scoring the degree of coincidence between the frequency from the first order to the n-th order (e.g., n=2) indicating the peak of the obtained spectrum, and the first and second order frequencies indicating the abnormality within a range of an allowable error, and comparing a total score over N instances and a standard total score P stored in advance.

The diagnosis result obtained by the personal computer 104 may be displayed on a display, for example, and may be confirmed by a user of the abnormality diagnosis apparatus 100, or may be transmitted or notified to an administrator (a person who is not the user of the abnormality diagnosis apparatus 100) from the personal computer 104 via a network or the like. Alternatively, the diagnosis result obtained by the personal computer 104 may be recorded in a recording location (device) that can be later confirmed by the user or the like of the abnormality diagnosis apparatus 100, for example.

By the procedure as shown in Fig. 5, the large amount of noise included in the observation signal dk is largely canceled, and a spectral signal according to which highly accurate abnormality diagnosis is possible can be obtained.

Here, in describing a specific example of the spectral signal obtained by the abnormality diagnosis apparatus 100 of this embodiment, a comparative example compared with this embodiment will be described. This comparative example is a procedure in which noise cancelation by an adaptive filter is omitted in the abnormality diagnosis apparatus 100 of this embodiment.

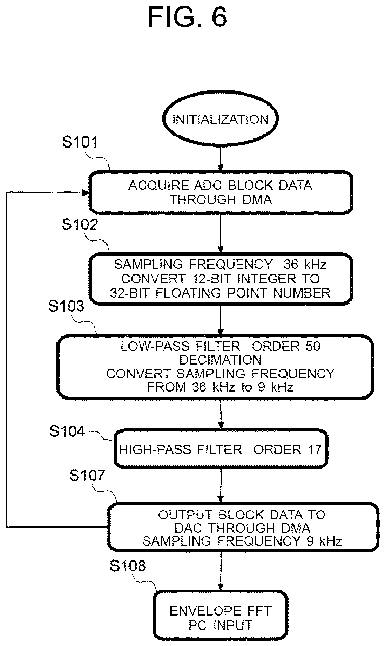

Fig. 6 is a flowchart showing the procedure of the comparative example.

In the comparative example, the envelope FFT is performed after decimation by an FIR low-pass filter and high-pass filter processing. That is, in the procedure shown in Fig. 6, step S101, step S102, step S103, and step S104 are executed in the same manner as in the procedure shown in Fig. 5. However, after that, there is no noise removal performed through delay processing corresponding to step S105 in Fig. 5 and Kalman filter processing corresponding to step S106, and the processing proceeds from step S104 to step S107 and step S108.

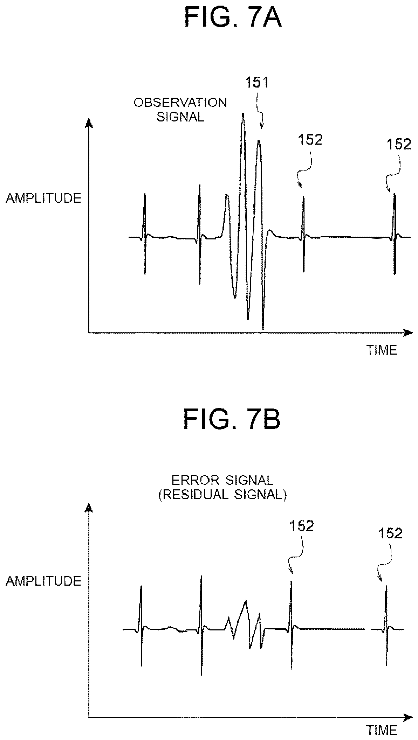

Figs. 7A and 7B are illustrative views showing a time signal in the abnormality diagnosis apparatus of this embodiment.

Fig. 7A shows a graph of the observation signal obtained from the vibration acceleration sensor 105 shown in Fig. 2, and Fig. 7B shows a graph of the residual signal obtained by the abnormality diagnosis apparatus 100 of this embodiment. The horizontal axis of each graph represents time, and the vertical axis represents signal amplitude.

In the graph of the observation signal (Fig. 7A), a waveform 151 of vibration generated in the axle 203 when the wheel 202 passes over the seam 205 of the rail 201 shown in Fig. 1B appears, and pulsed waveforms 152 caused by defects such as scratches on the bearing appear. If a defect occurs in the track surface (not shown) of a bearing, the impact is transmitted to the bearing unit 204 each time the rolling element (not shown) of the bearing passes the defect (e.g., a flaw) in the track surface of the bearing and a pulsed waveform 152 is generated every cycle in which the rolling element (e.g., a roller) passes the defect location.

This observation signal is a signal obtained by subjecting the signal obtained from the vibration acceleration sensor 105 to the processing of the comparative example shown in Fig. 6. Specifically, FIR filtering processing of a high-pass filter and a low-pass filter is applied.

Since the waveform 151 of the vibration generated at the seam 205 of the rail 201 has a large amplitude but is a narrow band waveform, the waveform can be estimated by an adaptive filter of a small order. By contrast, the waveforms 152 of the vibrations generated by the defect of the bearing unit 204 are wide band waveforms and cannot be estimated by an adaptive filter of a small order. For this reason, in noise estimation using an adaptive filter of a limited order, only the waveform 151 of the rail seam 205 is estimated, and therefore the waveforms 152 of the bearing defect remain in the residual signal obtained by subtracting the estimated signal from the observation signal (i.e., the calculation result obtained by equation (14)).

That is, when the observation signal shown in the graph of Fig. 7A is input to a noise canceler using a Kalman filter as an adaptive filter and is processed according to the procedure described in detail above, the residual signal shown in Fig. 7B is obtained as the residual signal.

In the waveform of the residual signal, the waveform 151 of the rail seam 205 is mostly removed, and mainly the waveforms 152 of the bearing defect are extracted.

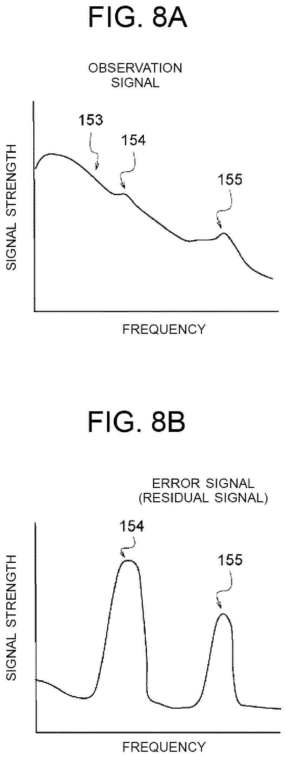

Fig. 8A shows a graph of the spectral signal of the observation signal obtained by the abnormality diagnosis apparatus 100, and Fig. 8B shows a graph of the spectral signal of the residual signal obtained by the abnormality diagnosis apparatus 100. The horizontal axis of each graph represents frequency, and the vertical axis represents signal strength.

The spectral signals shown in the graph of Fig. 8A and the graph of Fig. 8B are obtained by implementing envelope FFT processing on each of the observation signal and the residual signal shown in the graph of Fig. 7A and the graph of Fig. 7B. However, the graphs of Figs. 8A and 8B show a schematic image in which the spectral signal is smoothed in the frequency domain.

In the graph of the observation signal (Fig. 8A), noise 153 that gradually increases toward zero frequency appears, and this noise 153 corresponds to the vibration generated at the seam 205 of the rail 201. On the other hand, in the graph of the residual signal (Fig. 8B), the noise 153 of the seam 205 of the rail 201 is significantly reduced, and frequency peaks 154 and 155 of the vibration caused by the defect in the bearing (not shown) become clear. Of these frequency peaks 154 and 155, the frequency peak 154 on the low frequency side is the peak of the fundamental wave corresponding to the frequency at which the rolling element passes the defect on the outer ring track surface of the axle bearing, and the frequency peak 155 on the high frequency side is the peak of the second harmonic.

As described above, the noise canceling processing in this embodiment is realized by automatic estimation of the time-varying parameters Qk and Rk, but the system noise Q and the observed noise R may be fixed values obtained through trial and error. However, there are fewer mistakes in automatic adjustment performed using equations (12) and (13). Conventionally, in the Kalman filter, the variances of system noise and observed noise needed to be input as adjustment parameters. On the other hand, in the noise canceler of the embodiment of the present invention, highly-accurate noise canceling processing is realized by a data-driven algorithm in which a method of automatically estimating system noise and observed noise works favorably.

Next, an example in which the abnormality diagnosis apparatus 100 shown in Fig. 1C is applied to a diagnosis target other than the truck 200 will be described.

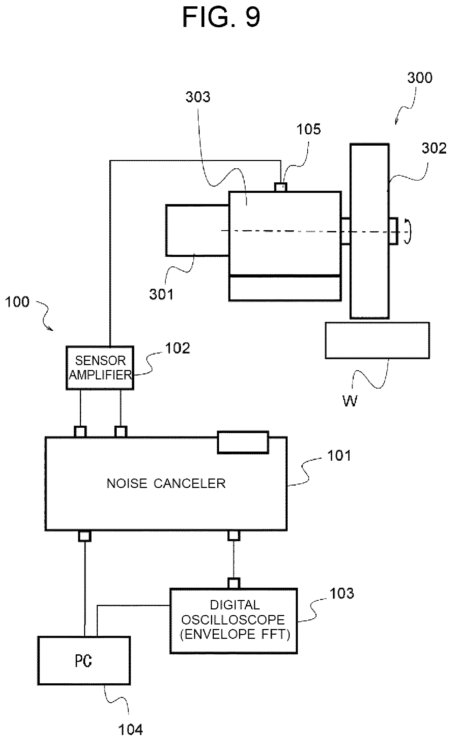

Fig. 9 is a diagram showing another application example of the abnormality diagnosis apparatus 100.

Fig. 9 shows the abnormality diagnosis apparatus 100, which is also shown in Fig. 1C, and further shows a grinding machine 300 as a diagnosis target in place of the truck 200.

The grinding machine 300 includes a motor 301, a rotary grindstone 302, and a bearing portion 303 having a built-in spindle bearing. A workpiece W is ground by pressing the workpiece W against the outer circumferential surface of the rotary grindstone 302. In the grinding machine 300, as mechanical noise, natural vibration and whirling of a shaft of the motor 301, whirling of the rotary grindstone 302, natural vibration of an overhang shaft, and the like occur. Also, the mechanical noise in the grinding machine 300 changes depending on whether the rotary grindstone 302 is in contact with the workpiece W or not.

The vibration acceleration sensor 105 of the abnormality diagnosis apparatus 100 is fixed to the outer surface of the bearing portion 303. The observation signal dk is obtained by this vibration acceleration sensor 105.

The abnormality diagnosis apparatus 100 can perform the above-described processing based on the obtained observation signal dk to cancel the large amount of mechanical noise generated in the grinding machine 300. As a result, it is possible to accurately diagnose an abnormality such as a scratch on the spindle bearing of the bearing portion 303, for example. Note that in the above description, the bearing unit 204 includes a double-row tapered roller bearing, but the bearing unit 204 may include a bearing other than a double-row tapered roller bearing.

Second Embodiment

Next, a second embodiment of the abnormality diagnosis apparatus of the present invention will be described.

The abnormality diagnosis apparatus of the second embodiment is, for example, an abnormality diagnosis apparatus incorporated in an industrial machine vehicle such as a dump truck, the industrial machine vehicle serving as the diagnosis target.

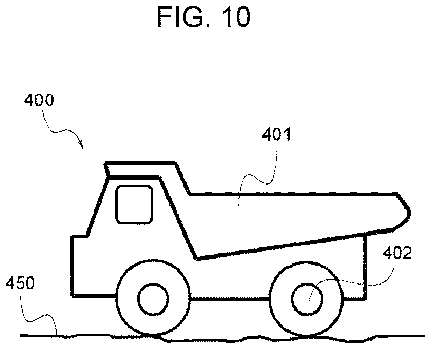

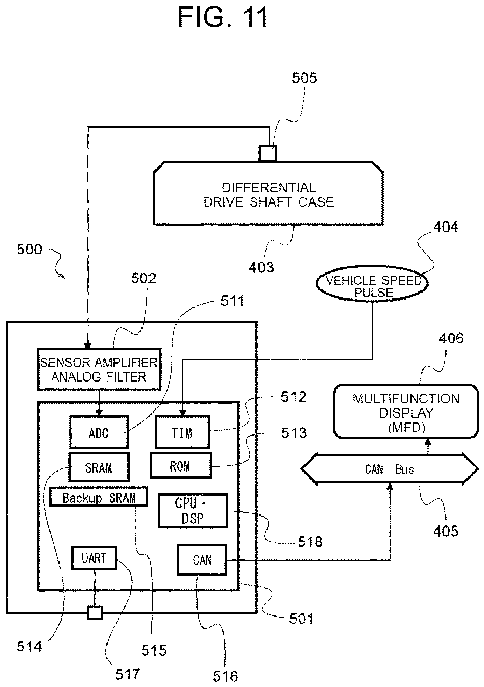

Fig. 10 is a diagram showing a dump truck 400 in which the abnormality diagnosis apparatus 500 (Fig. 11) of the second embodiment is incorporated.

The dump truck 400 is an industrial machine vehicle in which, for example, ore is loaded in a vessel 401 and which is driven by rear wheels 402. The drive of the rear wheel 402 is executed by the rotation of the drive shaft of the rear wheel being transmitted to the wheel and the tire via a speed reducer installed on the inner circumference of the wheel. In a wheel bearing, an outer ring rotates integrally with the wheel, and an inner ring is fixed together with a drive shaft and a differential case.

In Fig. 10, since the dump truck 400 travels on unpaved and rough ground 450, for example, irregular vibration caused by pushing up from the ground and vibration accompanying the movement of the load on the vessel 401 occur as noise. Mechanical vibration caused by the gears of a gearbox, vibration caused by driving the engine, and the like also cause noise.

Fig. 11 is a diagram showing an abnormality diagnosis apparatus 500 incorporated in the dump truck 400 shown in Fig. 10.

The abnormality diagnosis apparatus 500 shown in Fig. 11 is, for example, a device for diagnosing a wheel bearing.

The vibration acceleration sensor 505 of the abnormality diagnosis apparatus 500 is attached to a case 403 of a drive shaft to which the inner ring of the wheel bearing is fixed, with the direction perpendicular to the rotation axis of the bearing as the vibration detection direction.

The abnormality diagnosis apparatus 500 is mounted in a vehicle as a part of the function of an ECU (engine control unit). The abnormality diagnosis apparatus 500 includes a microcomputer 501 and an input circuit 502 including a sensor amplifier and an analog filter.

The microcomputer 501 includes an AD converter 511, a timer counter 512, a ROM 513, an SRAM 514, a backup SRAM 515, a CAN interface 516, a UART 517, and a processor 518.

The AD converter 511 receives the observation signal of the vibration acceleration sensor 505 via the input circuit 502, and samples the received observation signal.

The timer counter 512 counts a vehicle speed pulse 404 output from an encoder of the dump truck 400 to obtain the rotational speed of the bearing to be diagnosed. According to the rotation speed obtained in this manner, the characteristic frequency at a time of abnormality of the bearing is recognized.

The CAN interface 516 can communicate with various parts of the dump truck 400 via a CAN bus 405 of an in-vehicle network. Note that if the vehicle speed is obtained from the in-vehicle network, the timer counter 512 is unnecessary and the CAN interface 516 is used. A multifunction display 406 is connected to the CAN bus 405, and the CAN interface 516 displays the diagnosis result of the abnormality diagnosis apparatus 500 on the multifunction display 406 via the CAN bus 405.

The ROM 513 stores a program that performs signal processing as a noise canceler, envelope FFT processing, and abnormality diagnosis processing. The processor 518 performs digital processing according to this program. The processor 518 includes a CPU or a DSP. Temporary data used for each of the above-described processes is stored in the SRAM 514. As the SRAM 514, an SRAM having a sufficiently large capacity is used.

The backup SRAM 515 is an SRAM to which a battery is attached, and diagnosis results and diagnosis conditions are stored in the backup SRAM 515.

The UART 517 is used for reading records created by a personal computer or the like and changing the setting of the diagnostic conditions.

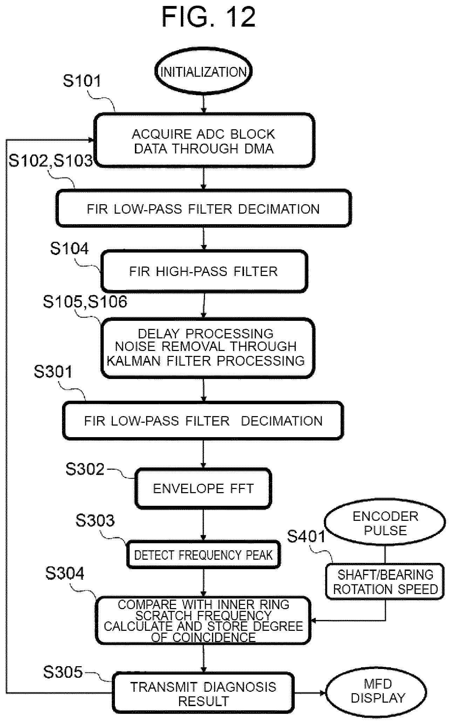

Fig. 12 is a flowchart showing a procedure of abnormality diagnosis in the abnormality diagnosis apparatus 500. In the description of Fig. 12, the same reference numerals are used for the same steps as in the first embodiment (Fig. 5).

In the procedure of abnormality diagnosis shown in the flowchart of Fig. 12, the same procedure as in steps S101 to S106 of Fig. 5 is executed, and the residual signal from which the noise is canceled is calculated.

In the procedure of Fig. 12, in step S301 after S106, the residual signal is subjected to processing of an FIR low-pass filter, and decimation. As a result, the number of processing points in the envelope FFT processing is suppressed, and the processing calculation becomes lighter.

In step S302, the envelope FFT processing is executed, and in step S303, the pulsed waveforms 152 as shown in Fig. 7A are detected and a frequency corresponding to the pulse cycle is obtained.

As step S401, which is performed in parallel with each of the above processes, the timer counter 512 counts the encoder pulse and the rotation speed of the shaft and the bearing is calculated.

In step S304, the peak frequency obtained in step S302 is compared with the characteristic frequency of the inner ring scratch recognized based on the rotation speed calculated in step S401, and the degree of coincidence is calculated and stored in the backup SRAM 515. The degree of coincidence calculated in this manner corresponds to the diagnosis result, and the degree of coincidence being high indicates that an abnormality such as an inner ring scratch has occurred.

In step S305, the diagnosis result is transmitted to and displayed on the multifunction display 406 via the CAN interface 516 and the CAN bus 405.

The processing of each step described above is repeatedly executed while the engine of the dump truck 400 is running. The driver or the like of the dump truck 400 can find out whether or not there is an abnormality in a bearing or the like by checking the display of the multifunction display 406.

Third Embodiment

Next, in the abnormality diagnosis apparatus of the present invention, an embodiment devised to reduce the amount of calculation will be described as a third embodiment.

It is desired that the abnormality diagnosis apparatuses 100 and 500 shown in Figs. 1C and 10 are realized by inexpensive apparatuses such as embedded computers mounted in a railway vehicle and a dump truck, and diagnose abnormalities in bearings or the like through real-time processing. However, although the Kalman filter is superior in ease of use and accuracy compared to an LMS, it requires a large amount of calculation, and therefore ingenuity to reduce the amount of calculation is desired in order to realize the abnormality diagnosis apparatuses 100 and 500 with inexpensive apparatuses such as embedded computers. In view of this, in the third embodiment described below, a processing procedure for reducing the amount of calculation is executed before the signal processing performed using the Kalman filter. The configuration of the abnormality determination apparatus of the third embodiment may employ the configuration of the abnormality determination apparatus 100 of the first embodiment, or the configuration of the abnormality determination apparatus 500 of the second embodiment. In the following description, the same reference numerals are used for the same processing and the like as in the first embodiment and the second embodiment. It is assumed that the sampling frequency of the AD converter 121 is 24 kHz.

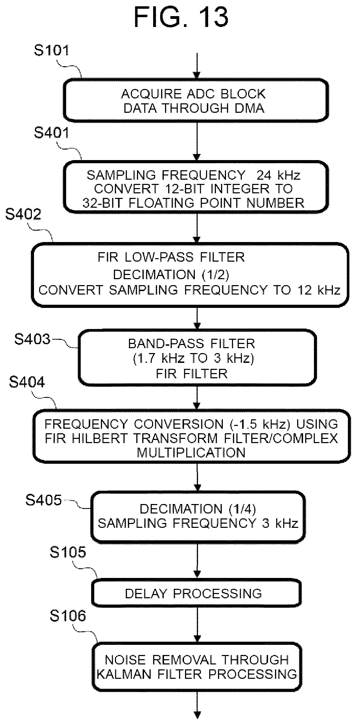

Fig. 13 is a flowchart including a processing procedure for reducing the amount of calculation. The flowchart of Fig. 13 shows steps corresponding to steps S101 to S 106 in the flowcharts of Figs. 5 and 12, and the steps other than S101 to S106 use steps and procedures shown in Fig. 5 or 12.

In the processing procedure shown in Fig. 13, step S101 is executed and the observation signal dk is acquired as in the first embodiment and the second embodiment. Next, in step S401, the processing corresponding to step S102 is performed, but unlike step S102, a 12-bit integer having a sampling frequency of 24 kHz is converted to a 32-bit floating point number.

Next, in step S402, the processing corresponding to step S103 is performed. Specifically, FIR low-pass filter processing is performed, and thereafter decimation is performed. In the FIR low-pass filter, the frequency component of 6 kHz or more is substantially cut off to -40 dB or less, and thus the influence of aliasing is avoided. If the passband where attenuation does not occur in the FIR low-pass filter is, for example, from DC to 4 kHz, the sampling frequency can be lowered to 12 kHz by decimation. This is a decimation of one half for the sampling frequency of 24 kHz in step S401.

Next, in step S403, FIR band-pass filter processing is executed. The passband of the band-pass is 1.7 kHz to 3.0 kHz, and the bandwidth is less than 1.5 kHz.

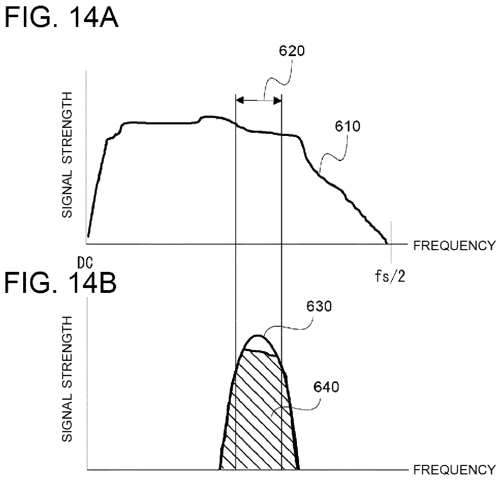

Figs. 14A and 14B are graphs schematically showing the operation of the band-pass filter (FIR band-pass filter processing).

The horizontal axes of the graphs of Figs. 14A and 14B show the frequency, and the vertical axes show the signal strength.

Fig. 14A shows a graph 610 of the observation signal dk, and Fig. 14B shows a graph of a band portion 640 that has passed through the band-pass filter 630.

The graph 610 of the observation signal dk extends from the DC component to half of the sampling frequency fs, and the band 620 including the signal component necessary for abnormality diagnosis such as bearings is a part of it. The passband of the band-pass filter 630 is set to the band 620 of the signal component required for abnormality diagnosis. By implementing the processing of the band-pass filter 630 on the observation signal dk, the band portion 640 required for abnormality diagnosis is extracted from the graph 610 of the observation signal dk.

In this manner, the band-pass filter processing is executed in step S403 of Fig. 13, and thereafter frequency down-conversion is performed in step S404. The frequency down-conversion is specifically realized through complex multiplication described in detail below.

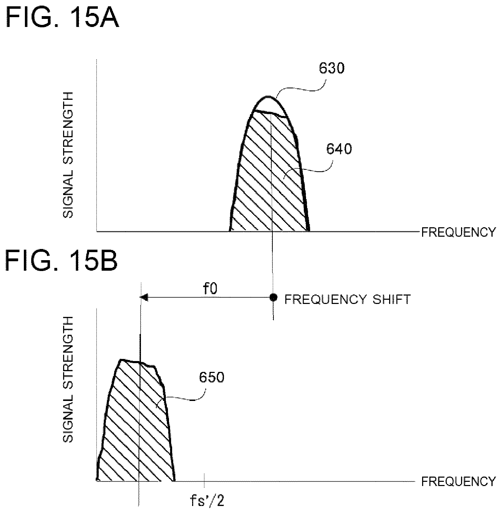

Figs. 15A and 15B are graphs schematically showing the action of frequency down-conversion. The horizontal axes of the graphs of Figs. 15A and 15B show the frequency, and the vertical axes show the signal strength.

Fig. 15A shows a graph of the band portion 640 before the down-conversion, and Fig. 15B shows a graph of the band portion 650 after the down-conversion. Since the bandwidth of the band-pass filter described as an example in step S403 of Fig. 13 is less than 1.5 kHz, there is a band without a frequency component on the DC side relative to the band portion 640 before down-conversion. The band portion 640 is shifted to the low frequency side by a frequency f0 so as to eliminate such a band without a frequency component. As a result, the band portion 650 after down-conversion falls into a frequency domain that is half or less of a new sampling frequency fs', which is significantly lower than the initial sampling frequency fs. If the bandwidth is less than 1.5 kHz, the new sampling frequency fs' may be reduced to 3 kHz.

Here, a specific calculation method for down-conversion will be described. As described above, in step S404 of Fig. 13, down-conversion is realized through complex multiplication.

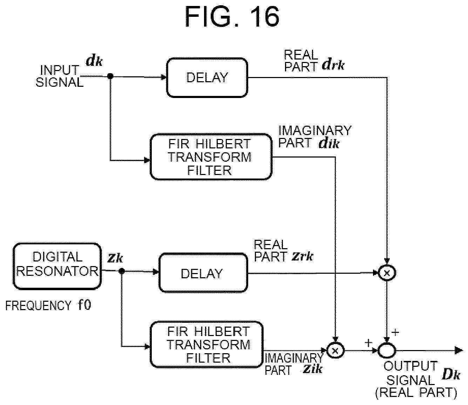

Fig. 16 is a diagram showing a processing concept of down-conversion through complex multiplication.

In the down-conversion performed through complex multiplication, the observation signal dk corresponding to the band portion 640 that has been subjected to the band-pass filter processing shown in Fig. 15A is subjected to complexification processing. In this complexification, an imaginary part dik is calculated based on the observation signal dk by an FIR Hilbert transform filter. This filter coefficient can be calculated by commercially-available or free software, and detailed description here is omitted. When an observation signal dk of a real number is input to the FIR Hilbert transform filter, the corresponding imaginary part dik is output from the FIR Hilbert transform filter, but the output of the imaginary part dik is delayed with respect to the input observation signal dk, and therefore, as the real part drk of the complexification, a real part obtained by delaying the input observation signal dk according to the output of the imaginary part dik is used.

On the other hand, a sine wave zk having a frequency f0 corresponding to the shift amount of the frequency shift (conversion) is oscillated by using a digital resonator as an oscillator. The details of sine wave oscillation performed by a digital resonator are omitted, but since a sine wave can be generated by a gradual equation and the amplitude and frequency can be specified by the initial value, it is convenient to generate a sine wave of any frequency. Similar to the observation signal dk, the sine wave zk is also complexified through FIR Hilbert transform filter processing and delay processing to obtain the real part zrk and the imaginary part zik.

The observation signal dk and the sine wave zk complexified in this manner are subjected to complex multiplication. That is, as shown in the following equation (15), the real part drk and the real part zrk are multiplied, the imaginary part dik and the imaginary part zik are multiplied, and the multiplication results are added to each other to obtain the observation signal Dk (real part) subjected to down-conversion.

$$D_k \;=\; d_{rk} \cdot z_{rk} \;+\; d_{ik} \cdot z_{ik} \qquad \cdots (15)$$

Here, a method for further reducing the amount of calculation by performing down-conversion of a frequency using a numerical table instead of an oscillator will be described.

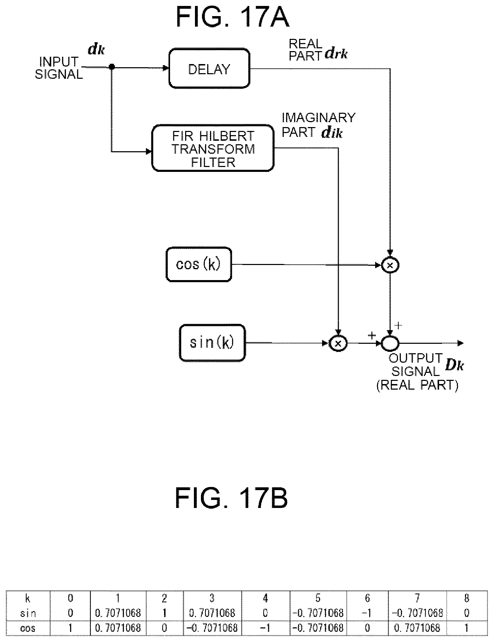

Fig. 17A is a diagram showing a processing concept of down-conversion using a numerical table.

In the case of down-conversion using a numerical table, cos(k) is used as the real part obtained by complexifying a sine wave, and sin(k) is used as the imaginary part. Then, the specific values of the real part and the imaginary part are stored in a storage region in advance as numerical value data in the form of a numerical table. As an example, if a shift (conversion) to a lower band occurs by a frequency corresponding to one-eighth of the sampling frequency, the numerical table shown in Fig. 17B is used. The subscript k in the numerical table is incremented each sampling cycle, and when it reaches 8, it returns to 0 and is repeated thereafter. For each sampling period, the values in the numerical table and the observation signal dk subjected to complexification (real part drk and imaginary part dik) are subjected to complex multiplication as shown in the following equation (16).

$$D_k \;=\; d_{rk}\, cos(k) \;+\; d_{ik}\, sin(k) \qquad \cdots (16)$$

By using the numerical table in this way, the amount of calculation in down-conversion is reduced.

The down-conversion described above is performed in step S404 of Fig. 13. The down-conversion processing in step S404 corresponds to an example of the operation processing performed by the down-conversion unit of the present invention. For example, if the sampling frequency is 12 kHz and down-conversion equivalent to one-eighth is performed, the frequency is shifted to the low frequency side by 12/8 = 1.5 kHz (corresponding to the frequency f0 shown in Fig. 15B).

In the above-described example, the observation signal Dk obtained by down-conversion has a frequency band upper limit of 1.5 kHz or less and a lower limit of DC or more. Accordingly, even if the sampling frequency (corresponding to the sampling frequency fs' shown in Fig. 15B) is lowered to 3 kHz, the signal content is not influenced. For this reason, in step S405 of Fig. 13, the sampling frequency of 12 kHz is decimated to one-fourth, and the sampling frequency becomes 3 kHz.

The observation signal that has undergone down-conversion and decimation is used as the new observation signal dk, and the processing of steps S105 and S106 is executed as in the first and second embodiments, but since the sampling frequency is reduced, the amount of calculation in steps S105 and S106 is greatly reduced. Accordingly, real-time operation is possible even with an inexpensive embedded computer.

If the third embodiment is applied to the first embodiment, the processing proceeds to step S107 after step S106. If the third embodiment is applied to the second embodiment, the processing proceeds to step S301 after step S106.

Note that the third embodiment may be applied to the fourth to sixth embodiments described below.

Fourth Embodiment

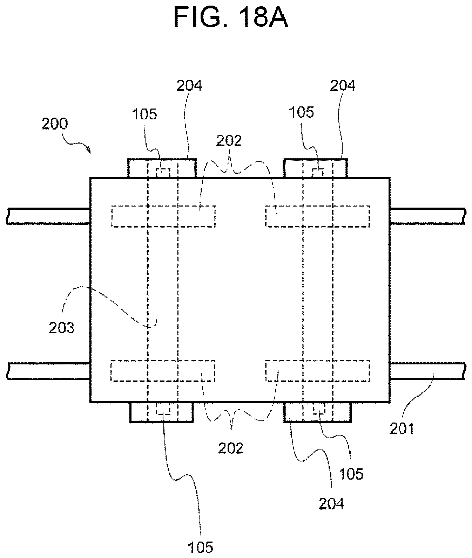

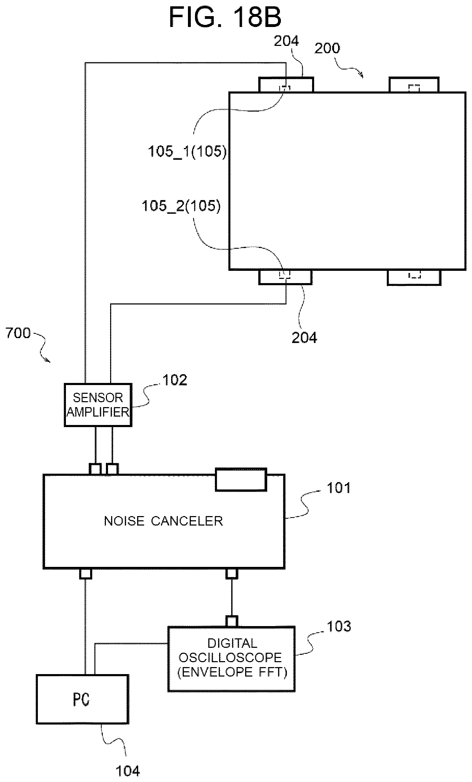

Figs. 18A and 18B are diagrams illustrating an abnormality diagnosis apparatus 700 according to the fourth embodiment of the present invention. Fig. 18A schematically shows a plan view of a railway bogie to be the target of abnormality diagnosis in this embodiment and a rail, and Fig. 18B shows a configuration of the abnormality diagnosis apparatus 700. The fourth embodiment is a variation of the first embodiment, and the same configurations and processing are designated by the same reference numerals. The side view of the railway bogie and the rail in Fig. 18A is the same as in Fig. 1B.

Similar to the first embodiment, the abnormality diagnosis apparatus 700 of this embodiment is an apparatus for performing an abnormality diagnosis on the bearing unit 204 in the truck 200. In the following description, description of items that are the same as in the first embodiment will be omitted as appropriate, and the description will be focused on the differences from the first embodiment.

A vibration acceleration sensor 105 that detects vibration acceleration in a direction perpendicular to the outer peripheral surface of the bearing is attached to each bearing unit 204. The function of the vibration acceleration sensor 105 is the same as that of the first embodiment.

The abnormality diagnosis apparatus 700 includes two vibration acceleration sensors 105 (105_1 and 105_2) as shown in Fig. 18B. One of the two vibration acceleration sensors 105 is a noise-canceled observation sensor 105_1 and the other is a reference sensor 105_2. That is, the observation signal obtained by the observation sensor 105_1 and the reference signal obtained by the reference sensor 105_2 are input to the abnormality diagnosis apparatus 700.

Note that the abnormality diagnosis apparatus 700 may include three or more vibration acceleration sensors 105.

The two vibration acceleration sensors 105 included in the abnormality diagnosis apparatus 700 are provided in the bearing unit 204 corresponding to each of the two wheels 202 connected by the same axle 203. Accordingly, if the wheel 202 goes over the seam 205 of the rail 201, the two vibration accelerometers 105 will receive vibrations that correlate with each other.

The two vibration acceleration sensors 105 included in the abnormality diagnosis apparatus 700 are provided side by side in the lengthwise direction of the axle 203 (axis direction) at two locations separated in that direction. Due to being arranged side by side in the same direction, the two vibration acceleration sensors 105 have the same phase in the rotation of the axle 203, and the two vibration acceleration sensors 105 pick up acceleration vibration in the same direction, and therefore the signal correlation becomes stronger.

The abnormality diagnosis apparatus 700 includes the noise canceler 101, the sensor amplifier 102, the digital oscilloscope 103, and the personal computer 104.

The sensor amplifier 102 amplifies the signal of the vibration detected by the observation sensor 105_1 and the reference sensor 105_2, and outputs the amplified signal to the noise canceler 101.

The noise canceler 101 obtains the observation signal (after amplification) from the observation sensor 105_1 and the reference signal (after amplification) from the reference sensor 105_2, and cancels the noise through filter processing, which will be described in detail later. This noise canceler 101 corresponds to an embodiment of the noise canceler of the present invention.

The functions of the digital oscilloscope 103 and the personal computer 104 are the same as those in the first embodiment.

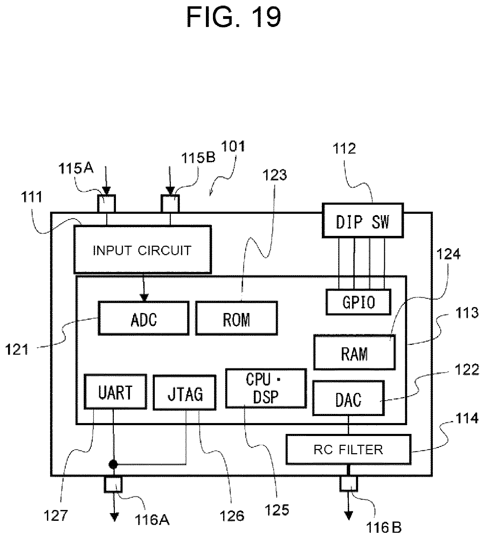

Fig. 19 is a diagram showing the structure of the noise canceler 101.

The noise canceler 101 includes the input circuit 111, the DIP switch 112, the one-chip microcomputer 113, the RC filter 114, BNC connectors 115A and 115B for input, and BNC connectors 116A and 116B for output.

The input circuit 111 includes an input buffer, a low-pass RC filter, and the like, and obtains an observation signal and a reference signal via the input BNC connectors 115A and 115B and outputs them to the one-chip microcomputer 113. Here, the signal acquisition unit refers to the BNC connectors 115A and 115B, the input circuit 111, and the AD converter 121 with a built-in one-chip microcomputer.

The DIP switch 112 includes, for example, a 3-bit switch for selecting a band of a band-pass filter that narrows the band of a signal input to the adaptive filter. Also, the DIP switch 112 includes a 1-bit switch that switches between whether to use signals obtained from different vibration acceleration sensors 105, or to use a delay signal and a non-delay signal obtained from the same vibration acceleration sensor 105 as the observation signal and the reference signal. However, in this embodiment, the observation signal and the reference signal are described as being signals obtained from vibration acceleration sensors 105 that are different from each other.

The RC filter 114 mitigates a case in which the output signal becomes a stepped signal, and prevents electrical disturbance noise from being mixed in. The output signal from the noise canceler 101 is output via the RC filter 114 and the BNC connectors 116A and 116B for output.

The one-chip microcomputer 113 implements filter processing on the observation signal and the reference signal input from the input circuit 111 through so-called digital signal processing, and outputs an output signal in which noise is canceled. The one-chip microcomputer 113 includes an AD converter 121, a DA converter 122, a ROM 123, a RAM 124, a processor 125, a JTAG 126, and a UART 127.

The AD converter 121 converts an analog observation signal and an analog reference signal into digital signals, and the DA converter 122 converts the processed digital signals into analog signals.

The functions of the ROM 123 and the RAM 124 are the same as those of the first embodiment.

The processor 125 performs filter processing through digital processing. As the filter processing, processing of a high-pass filter, a low-pass filter, and an adaptive filter is performed.

Here, the processing concept of the adaptive filter will be described.

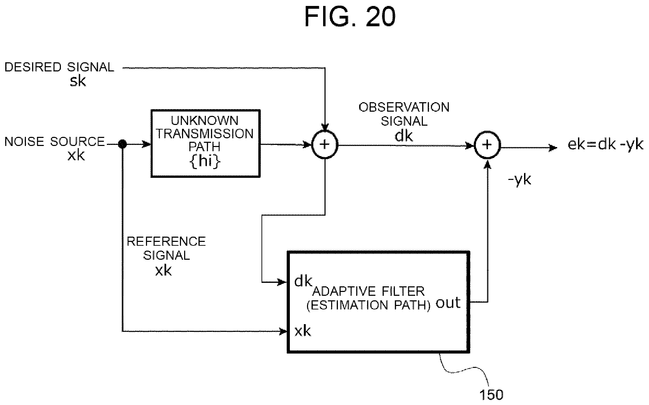

Fig. 20 is a diagram showing the processing concept of the adaptive filter.

The adaptive filter 150 is a filter that estimates the noise component vk in the observation signal dk based on the observation signal dk in which the noise signal from the noise source via an unknown transmission path {hi} is mixed in the desired signal sk, and the reference signal xk close to the noise source.

The reference signal xk is ideally a noise-only signal that does not include the desired signal sk, but it is difficult to obtain such an ideal reference signal. For this reason, in practice, a reference signal xk that contains the same kind of noise with respect to the observation signal dk and has a different ratio of the desired signal sk is used.

In the case of the abnormality diagnosis apparatus 700 shown in Fig. 18B, the observation signal dk and the reference signal xk as described above are obtained by the two vibration acceleration sensors 105 provided on the two bearing units 204 located at both ends of one axle 203.

In the adaptive filter 150, the transmission path {hi} is sequentially estimated such that the noise component yk generated through the transmission path {hi} of the reference signal xk has as small an error as possible with the observation signal dk. Due to such an estimation, the residual signal ek = dk-yk contains a large amount of the desired signal sk.

By accurately estimating the noise component yk, the desired signal sk is extracted as the residual signal ek = dk-yk obtained by subtracting the noise component yk from the observation signal dk.

In this embodiment, the estimated signal is the noise signal yk estimated by the adaptive filter 150.

In this embodiment, a Kalman filter is adopted as the adaptive filter 150, and in the Kalman filter, the noise signal yk is estimated by estimating the unknown transmission path {hi}. Estimating the unknown transmission path is equivalent to estimating the filter coefficients of the adaptive filter described below.

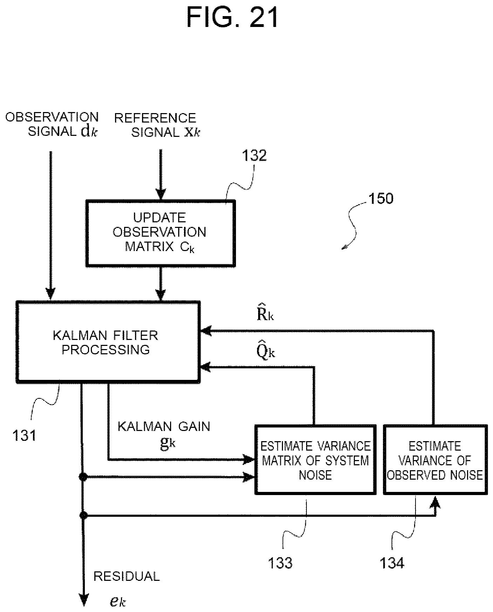

Fig. 21 is a diagram showing the configuration concept of the adaptive filter 150 using the Kalman filter.

The adaptive filter 150 in this embodiment includes a Kalman filter main body (Kalman filter processing unit) 131 and a time-varying element. The time-varying elements include an update unit 132 that updates the observation matrix cTk constituted by vectors that are past time series of the reference signal, a first estimation unit 133 that estimates the variance matrix Qk of the system noise, and a second estimation unit 134 that estimates the variance Rk of the observation noise.

The observation matrix cTk is a definite matrix obtained based on the reference signal xk obtained over time, and is expressed by the following equation (17).

$$c_k^T = \{\, x_{k-1,\, ...,\, } x_{k-N} \} \qquad \cdots (17)$$

In the adaptive filter 150, it is assumed that the noise component yk is expressed by the following equation (18).

$$y_k = \sum_{i=1}^{N} h_i x_{k-i} = c_k^T h_k \qquad \cdots (18)$$

Here, the order (number of taps) N of the filter is, for example, 10.

Next, a state space model, which is a basic model of the Kalman filter, is set. The change over time in the filter coefficient hk is expressed by the equation of state shown in the following equation (19). However, in this embodiment, an identity matrix is used as the transition matrix, which simplifies the calculation structure in the Kalman filter processing unit 131. The filter coefficient hk can be changed over time in the model of equation (19), and the estimation by the Kalman filter enables the estimation of an unsteady signal and noise.

$$h_{k+1} = h_k + w_k \qquad \cdots (19)$$

Here, wk (vector) represents system noise, which is Gaussian white noise with an average of zero. Next, the observation equation is expressed by the following equation (20). The observation matrix cTk is updated every hour as shown by equation (17).

$$d_k = c^T_k h_k + v_k \qquad \cdots (20)$$

Here, dk indicates the observed value. vk represents observed noise, which is Gaussian white noise with an average of zero. The state space model is set by equations (19) and (20). The state variable vector in this state space model is the filter coefficient hk, which is estimated sequentially by the Kalman filter.

The variance matrix Qk of the system noise wk in equation (19) is expressed by equation (21) below. The variance Rk of the observed noise vk in equation (20) is expressed by equation (22) below.

$$Q_k = E\{w_k \cdot w^T_k\} \qquad \cdots (21)$$

$$R_k = E\{v^2_k\} \qquad \cdots (22)$$

The variance matrix Qk of the system noise and the variance Rk of the observed noise function as adjustment parameters in the Kalman filter that estimates the filter coefficient hk.

The procedure for noise cancelation with an adaptive filter, to which Kalman filter processing is applied, will be described.

In the Kalman filter processing unit 131, the filter coefficient hk is estimated as the state estimation value h (with ^) k through a prediction step and a filtering step. In the prediction step, the pre-state estimated value h (with ^) -k and the pre-error covariance matrix P-k are calculated by the following equations (23) and (24) with the transition matrix as the identity matrix.

$$\hat{h}^-_k = \hat{h}_{k-1} \qquad \cdots (23)$$

$$P^-_k = P_{k-1} + Q_k \qquad \cdots (24)$$

Then, in the filtering step, the Kalman gain gk, the state estimation value h (with ^) k, and the post-error covariance matrix Pk are calculated by the following equations (25), (26), and (27).

$$g_k = \frac{P^-_k c_k}{c^T_k P^-_k c_k + R_k} \qquad \cdots (25)$$

$$\hat{h}_k = \hat{h}^-_k + g_k(d_k - c^T_k \hat{h}^-_k) \qquad \cdots (26)$$

$$P_k = (I - g_k c^T_k)P^-_k \qquad \cdots (27)$$

As a result of estimating the filter coefficient hk (i.e., the transmission path {hi}) through such a step, in the Kalman filter processing unit 131, the residual signal ek = dk-cTkh (with ^) k is calculated and output as the estimated value of the desired signal (bearing vibration) as shown in the following equation (30). This residual signal is a residual signal obtained by using the subsequent estimation value obtained at a time k in equation (26) as a filter coefficient.

Note that dk-cTkh (with ^) -k in equation (26) indicates a prior output estimation error, and this prior output estimation error may be used as a desired signal in place of the residual signal ek.

Although it is extremely difficult to directly estimate the variance matrix of the system noise and the variance of the observed noise, which are parameters of the Kalman filter, it is desirable that the variance matrix of the system noise and the variance of the observed noise are considered to be adjustment parameters, and although it is not necessary to set highly accurate values, it is desirable that they fall within the range of a certain order to achieve the purpose of noise cancelation.

In this embodiment, the time-varying parameters Qk and Rk are respectively used as the variance matrix of the system noise and the variance of the observed noise, and sequential estimation is performed by the first estimation unit 133 and the second estimation unit 134.

Although the fixed values Q and R of the system noise may be used instead of the time-varying parameters Qk and Rk as the variance matrix of the system noise and the variance of the observed noise, if the time-varying parameters Qk and Rk are used, the variance matrix of the system noise and the variance of the observed noise naturally converge or change to appropriate values together with the estimation of the filter coefficient hk. Accordingly, it is desirable that the time-varying parameters Qk and Rk are used as the variance matrix of the system noise and the variance of the observed noise. Alternatively, after the time-varying parameters Qk and Rk have converged, the parameter values may be fixed for the purpose of reducing the amount of calculation or the like.

In the first estimation unit 133, a variance matrix estimation value Q (with ^) k of the system noise is estimated by the following equation (28), and in the second estimation unit 134, a variance estimation value R (with ^) k of the observed noise is estimated by equation (29). The coefficient $\alpha$ is a fixed value within the range of $0 < \alpha < 1$, the residual signal ek is a value calculated by the following equation (30), and based on these values, the variance matrix Q (with ^) k and the variance R (with ^) k are estimated.

$$\hat{Q}_k = \alpha \cdot \hat{Q}_{k-1} + (1-\alpha) \cdot \mathrm{diag}\left\{ [\hat{h}_k - \hat{h}_k^-]^2 \right\}$$
$$= \alpha \cdot \hat{Q}_{k-1} + (1-\alpha) \cdot \mathrm{diag}\left\{ [g_k \cdot e_k]^2 \right\} \qquad \cdots (28)$$

$$\hat{R}_k = \alpha \cdot \hat{R}_{k-1} + (1-\alpha) \cdot e_k^2 \qquad \cdots (29)$$

$$e_k = d_k - c_k^T \hat{h}_k \qquad \cdots (30)$$

In the algorithm using equations (17) to (30), appropriate initial values are set for P0, h (with ^)-0, Q (with ^) 0, and R (with ^) 0, whereby Q (with ^) k and R (with ^) k are adjusted in addition to the filter coefficient h (with ^) k automatically through only input of the observation signal dk and reference signal xk obtained from the vibration acceleration sensor, and the residual signal ek from which the noise has been appropriately removed is output.

Next, a specific procedure for noise cancelation in one embodiment of the noise canceler of the present invention, in which the noise canceler 101 and the digital oscilloscope 103 shown in Fig. 19 are combined, will be described with reference to a flowchart.

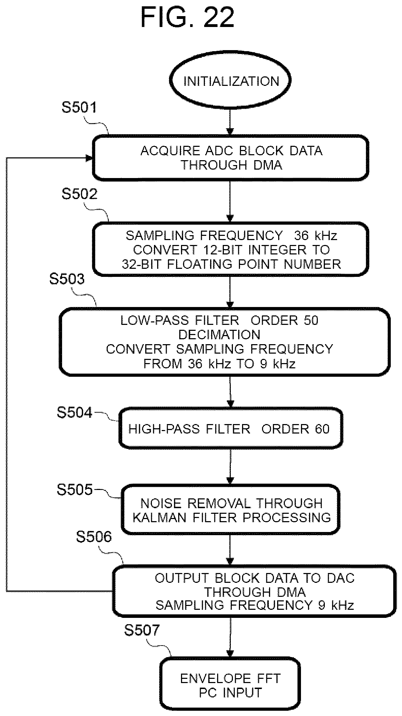

Fig. 22 is a flowchart showing a noise canceling procedure.

The procedure shown in the flowchart of Fig. 22 corresponds to one embodiment of the noise canceling method of the present invention. Hereinafter, in the description of the flowchart of Fig. 22, Figs. 18A, 1B, 18B and 19 are appropriately referred to.

The procedure of Fig. 22 starts from the initialization of the one-chip microcomputer 113 or the like by turning on the power, for example.

In step S501, the observation signal dk and the reference signal xk obtained by converting the measurement signal obtained from the vibration acceleration sensor 105 via the input circuit 111 and the AD converter 121 are acquired as block data in the RAM 124 through DMA. The sampling frequency of the AD converter 121 is, for example, 36 kHz.

In step S502, a 12-bit integer with a sampling frequency of 36 kHz is converted to a 32-bit floating point number.

In step S503, the processor 125 performs high-speed calculation of processing of a 50th-order FIR low-pass filter (gain 1 of 2.5 kHz or less) in order to remove the frequency band of 4.5 kHz or more (i.e., in order to obtain a gain of -50 dB or less). At the same time as this filter processing, the sampling frequency is decimated by one-fourth, from 36 kHz to 9 kHz.

In step S504, the processor 125 further performs 60th-order high-pass filter processing on the observation signal dk and the reference signal xk down-sampled to 9 kHz.

Since the observation signal dk and the reference signal xk are band-limited through the low-pass filter processing in step S503 and the high-pass filter processing in step S504, the number of sine waves to be combined is narrowed down in the observation signal dk and the reference signal xk, irregularity is mitigated and the signal and noise are easy to estimate. The specific band in the low-pass filter processing and the high-pass filter processing needs to be adjusted to some extent according to the type of the target apparatus for which abnormality diagnosis is performed, the driving condition, and the like.

At a minimum, a high-pass filter for DC removal and a low-pass filter for decimation are required. DC removal is processing that is essential before envelope processing. Since the amount of calculation of the adaptive filter can be reduced in proportion to the decimation rate by performing appropriate decimation processing, hurdles for realizing Kalman filter processing in real time with a microcomputer are lowered. Since it is necessary to complicate the analog filter when using a low sampling frequency from the AD conversion stage, it is advantageous to perform decimation with an FIR low-pass filter from a high sampling frequency. In this case, the filter processing at the decimated low sampling frequency is sufficient.

Since the band adjustment can be handled by the manual adjustment performed by the DIP switch 112, detailed description here will be omitted. The processing in which step S503 and step S504 are combined corresponds to the band-limiting unit referred to in the present invention. The band-limiting unit according to the present invention may limit the band through so-called band-pass filter processing.

Based on the observation signal dk and the reference signal xk that have been band-limited in this way, in step S505, the Kalman filter processing, which is the internal structure of the adaptive filter 150, is executed by the processor 125. Then, the residual signal ek is output as a signal from which noise has been removed.

In step S506, the residual signal ek is sent as block data to the DA converter 122 through DMA, and is converted into an analog residual signal ek at a sampling frequency of 9 kHz.

The processing of steps S501 to S506 is repeatedly executed while the observation signal dk and the reference signal xt are obtained. While the steps S501 to S506 are repeatedly executed, the residual signal ek converted by the DA converter 122 is subjected to the envelope FFT processing by the digital oscilloscope 103 in step S507 to become a spectral signal used for diagnosis. Then, the spectral signal that is the processing result is output from the digital oscilloscope 103 to the personal computer 104 and is used for abnormality diagnosis.

The diagnosis result obtained by the personal computer 104 may be displayed on a display, for example, to be confirmed by the user of the abnormality diagnosis apparatus 700, or may be transmitted/notified to an administrator or the like via a network or the like. Alternatively, the diagnosis result may be recorded in a recording apparatus that can be later confirmed by a user of the abnormality diagnosis apparatus 700, for example. Also, as shown in Fig. 18B, when used for bearing diagnosis in the truck 200, it is desirable that the diagnostic system including the abnormality diagnosis apparatus 700 is mounted in the railroad vehicle.

By the procedure as shown in Fig. 22, the large amount of noise included in the observation signal dk is largely canceled, and a spectral signal that can be subjected to highly accurate abnormality diagnosis can be obtained.

Here, in describing a specific example of the spectral signal obtained by the abnormality diagnosis apparatus 700 of this embodiment, a comparative example compared with this embodiment will be described. This comparative example is a procedure in which noise cancelation performed by an adaptive filter is omitted in the abnormality diagnosis apparatus 700 of this embodiment.

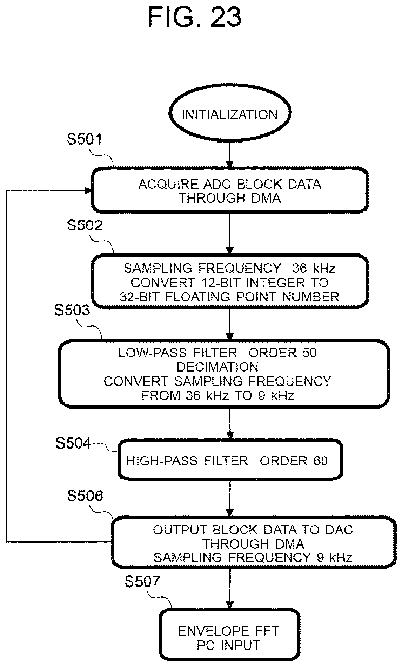

Fig. 23 is a flowchart showing the procedure of the comparative example.

In the comparative example, the envelope FFT is performed after decimation by an FIR low-pass filter and high-pass filter processing. That is, in the procedure shown in Fig. 23, steps S501 to S504 are executed in the same manner as in the procedure shown in Fig. 22. However, thereafter, there is no noise removal through Kalman filter processing corresponding to step S505 in Fig. 22, and the processing proceeds from step S504 to step S506 and step S507.

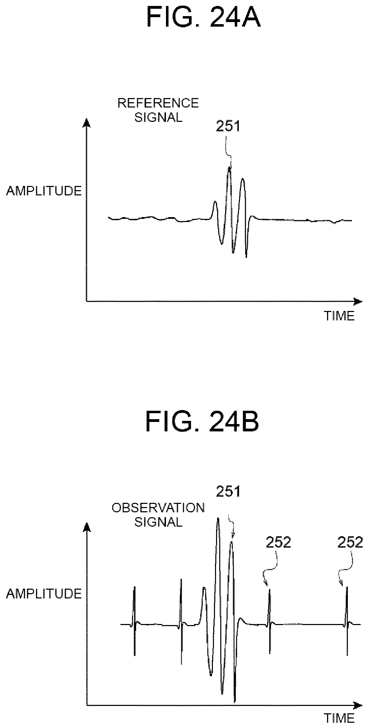

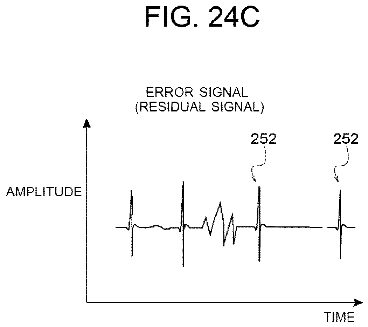

Figs. 24A, 24B, and 24C are diagrams showing time signals in the abnormality diagnosis apparatus 700 of this embodiment.

Fig. 24A shows a schematic graph of the reference signal obtained from the reference sensor 105_2 shown in Fig. 18B, Fig. 24B shows a schematic graph of the observation signal obtained from the observation sensor 105_1 shown in Fig. 18B, and Fig. 24C shows a schematic graph of the residual signal obtained by the abnormality diagnosis apparatus 700 of this embodiment. The horizontal axis of each graph represents time, and the vertical axis represents signal amplitude.

The graph of the reference signal (Fig. 24A) mainly shows the waveform 251 of the vibration generated in the axle 203 when the wheel 202 passes the seam 205 of the rail 201 shown in Fig. 1B. Also, the graph of the observation signal (Fig. 24B) shows the waveform 251 of vibration caused by the seam 205 of the rail 201, and the pulsed waveform 252 caused by a defect such as a scratch on the bearing. If a defect occurs in the track surface of the bearing, an impact is transmitted to the vibration acceleration sensor 105 to which the bearing unit 204 is attached each time the rolling element (e.g., roller) of the bearing passes the defect (e.g., a scratch or peeling) on the track surface of the bearing,

and a pulsed waveform 252 is generated every cycle of the rolling element (e.g., a roller) passing the defect location.

When the waveform 251 of the vibration caused by the seam 205 of the rail 201 is compared between the observation signal and the reference signal, there is mainly a time (phase) shift and an amplitude difference, but a correlation is seen in the waveform 251 between the observation signal and the reference signal.

Note that the reference signal and the observation signal shown in the graphs of Figs. 24A and 24B are signals obtained by subjecting the signal obtained from the vibration acceleration sensor 105 to the processing of the comparative example shown in Fig. 23. Specifically, FIR filtering processing of a high-pass filter and a low-pass filter is applied.

Since the phase and amplitude of the waveform 251 of the vibration caused by the rail seam 205 are different between the observation signal and the reference signal, the waveform 251 of the vibration caused by the rail seam 205 cannot be attenuated even if the difference between the observation signal and the reference signal is taken, in this embodiment, the waveform 251 is attenuated by an adaptive filter.

That is, when the reference signal shown in the graph of Fig. 24A and the observation signal shown in the graph of Fig. 24B are input to the noise canceler using the Kalman filter as an adaptive filter, and the processing is performed according to the procedure described in detail above, the residual signal shown in the graph of Fig. 24C is obtained as the residual signal.

In the waveform of the residual signal, the waveform 251 of the rail seam 205 is mostly removed, and the waveform 252 of the bearing defect is mainly extracted.

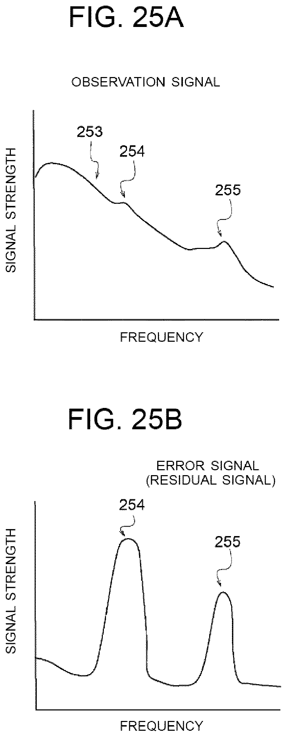

Fig. 25A is a diagram showing a graph of the spectral signal of the observation signal obtained by the abnormality diagnosis apparatus 700, and Fig. 25B is a diagram showing a graph of the spectral signal of the residual signal obtained by the abnormality diagnosis apparatus 700.

The horizontal axis of each graph represents frequency, and the vertical axis represents signal strength.

The spectral signals shown in the graphs of Figs. 25A and 25B are obtained by implementing envelope FFT processing on each of the observation signal shown in the graph of Fig. 24B and the residual signal shown in the graph of Fig. 24C. However, the graphs of Figs. 25A and 25B represent a schematic image in which the spectral signal is smoothed in the frequency domain.

The graph of the observation signal of Fig. 25A shows noise 253 that gradually increases toward zero frequency, and this noise 253 is noise corresponding to the vibration generated at the rail seam 205. On the other hand, in the graph of the residual signal of Fig. 25B, the noise 253 of the rail seam 205 is significantly reduced, and the frequency peaks 254 and 255 of the vibration generated by the defect of the bearing (not shown) become clear. Of these frequency peaks 254 and 255, the frequency peak 254 on the low frequency side is the peak of the fundamental wave corresponding to the frequency at which the rolling element pass the defect on the outer ring track surface of the axle bearing, and the frequency peak 255 on the high frequency side is the peak of the second harmonic.

As the algorithm of the Kalman filter, an algorithm for a UD decomposition filter that is numerically stabilized by an equivalent algorithm may be used instead of the standard algorithm described in detail before, and even in that case, the variance (matrix) estimation of the system noise and the observed noise shown in equations (28) and (29) can be performed in the same manner.

As described above, the noise canceling processing in this embodiment is realized by automatic estimation of the time-varying parameters $Q_k$ and $R_k$, but the system noise $Q$ and the observed noise $R$ may be fixed values obtained through trial and error. However, there are fewer mistakes in the automatic adjustment performed using equations (28) and (29).

If the Kalman filter is used as an adaptive filter, the noise removal ability is more excellent compared to that of the NLMS algorithm described below. The Kalman filter is superior to the NLMS in terms of both convergence speed and tracking. Also, with a Kalman filter, it is not necessary for the user (creator) to determine the step size parameter for updating the filter coefficient, and the optimum step size is substantially automatically determined by the calculation of the Kalman gain, and therefore the Kalman filter is easy to use.

Conventionally, with the Kalman filter, the variances of the system noise and the observed noise needed to be input as adjustment parameters. On the other hand, in the noise canceler of this embodiment, highly accurate noise canceling processing is realized by a data-driven algorithm in which a method of automatically estimating the system noise and the observation noise works favorably.

Note that the positions of the observation sensor 105_1 and the reference sensor 105_2 described with reference to Fig. 18B are not limited to the positions shown in Fig. 18B. For example, if abnormality diagnosis is desired for the bearing on the reference sensor 105_2 side shown in Fig. 18B, the reference sensor 105_2 side shown in Fig. 18B is used as an observation sensor to obtain an observation signal, and the observation sensor 105_1 side is used as a reference sensor to obtain a reference signal, whereby it is possible to perform abnormality diagnosis. In this case, even if a defect occurs in the bearing on both the observation sensor 105_1 side and the reference sensor 105_2 side, the vibration signals of both bearings do not have a correlation. For this reason, one bearing that is a target of noise removal can be diagnosed regardless of whether or not there is a defect in another bearing.

The reference sensor 105_2 may be provided at a different position from the four bearings, but the observation sensor 105_1 and the reference sensor 105_2 are preferably provided on each bearing corresponding to each of the two wheels 202 connected by one axle 203. This is because, as described above, in the truck 200, two wheels 202 are fixed to one axle 203 and rotate together, and therefore, in addition to the vibration received by the wheels from the rail 201, the vibration from the vehicle such as the drive gear also tends to be correlated vibration in the bearings at both ends of one axle 203. When such correlated vibration enters the observation sensor 105_1 and the reference sensor 105_2 as noise, the vibration signal caused by the bearing defect is effectively extracted as an error signal through the noise removal.

Fifth Embodiment

Next, an embodiment in which the type of the adaptive filter is different from that of the fourth embodiment will be described as a fifth embodiment. In the fifth embodiment, a normalized LMS is used instead of the Kalman filter. The fifth embodiment is a variation of the fourth embodiment. In the following description, the same reference numerals will be used for the same configurations and processes as in the fourth embodiment.

In a normalized LMS, the step size in the LMS (least mean squares) algorithm varies according to the magnitude of the input signal (i.e., the variance of the noise). Since the processing content in the normalized LMS is known, description thereof is omitted here, but by using the normalized LMS for the adaptive filter 150, as described above, sequential estimation of the transmission path [hi] is performed such that the difference between the noise component yk and the observation signal dk is as small as possible. The estimation of the transmission path {hi} obtained by the normalized LMS is executed as an estimation of the filter coefficient hk as in the case of the Kalman filter, but the normalized LMS uses multiple fixed parameters for the sequential estimation. The specific value of this fixed parameter is adjusted to an appropriate value according to the type of the target device for which the abnormality diagnosis is performed, the driving condition, and the like.

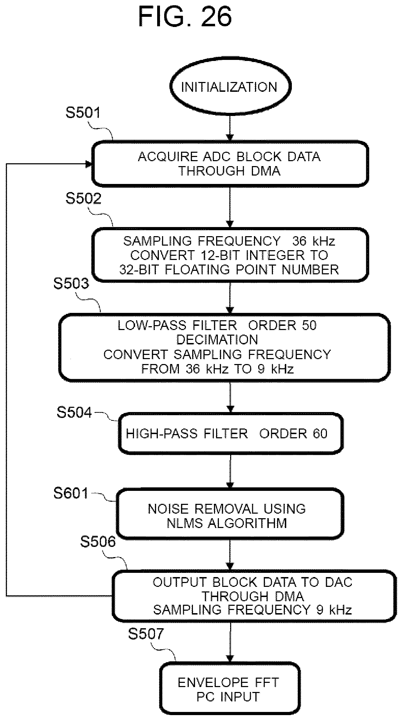

Fig. 26 is a flowchart showing a noise canceling procedure in this embodiment in which the normalized LMS is used.

In the procedure shown in Fig. 26, step S501, step S502, step S503, and step S504 are executed in the same manner as in the procedure shown in Fig. 22. Thereafter, instead of the Kalman filter processing in step S505 of Fig. 22, the normalized LMS (NLMS) processing is executed in step S601. Then, the processing proceeds to step S506 and step S507.

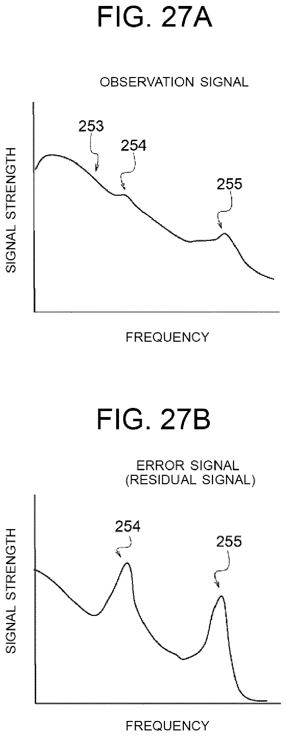

Fig. 27A is a diagram showing a graph of the spectral signal of the observation signal obtained in the comparative example, and Fig. 27B is a diagram showing the spectral signal of the residual signal.

The graph in Fig. 27A is the same as the graph in Fig. 25A. The graph of Fig. 27B shows a graph of the smoothing spectrum of the residual signal obtained by performing noise cancelation using the NLMS algorithm based on the observation signal and the reference signal in the procedure shown in Fig. 26.

The LMS algorithm including the NLMS algorithm can adapt to an unstable signal and noise, and therefore although it is inferior to a Kalman filter, it can remove the noise 253 of the rail seam 205 from the observation signal similarly to the Kalman filter, and the vibrations 254 and 255 caused by the defect in the bearing become clear.

It this manner, it can be understood that even when the normalized LMS is used as the adaptive filter 150, a spectral signal suitable for abnormality diagnosis can be obtained.

Next, an example in which the abnormality diagnosis apparatus 700 shown in Fig. 18B is applied to a diagnosis target other than the truck 200 will be described.

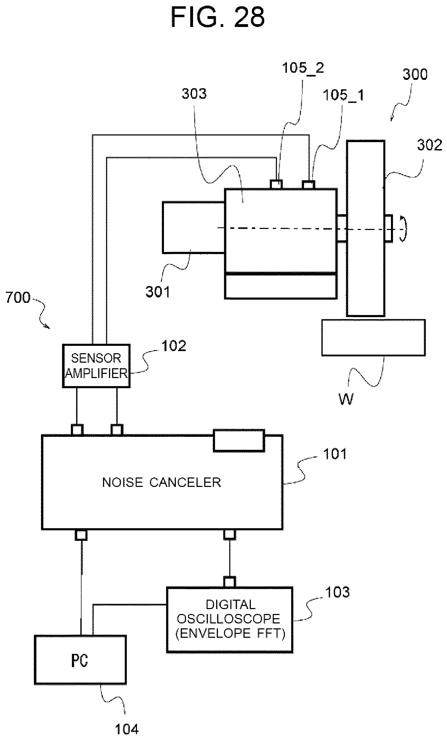

Fig. 28 is a diagram showing an example in which the abnormality diagnosis apparatus 700 is applied to a grinding machine 300.

The grinding machine 300 includes a motor 301, a rotary grindstone 302, and a bearing portion 303 having a built-in spindle bearing. The configuration of the grinding machine 300 is the same as that of the grinding machine 300 described with reference to Fig. 9.

The observation sensor 105_1 and the reference sensor 105_2 of the abnormality diagnosis apparatus 700 are fixed at two locations arranged side by side in the direction along the rotation axis of the motor 301 and the rotary grindstone 302 at a distance from each other in that direction. The observation signal dk and reference signal xk are obtained by the observation sensor 105_1 and the reference sensor 105_2.

The abnormality diagnosis apparatus 700 can perform the above-described processing based on the observation signal dk and the reference signal xt obtained in this manner, and can cancel the large amount of mechanical noise generated in the grinding machine 300. As a result, it is possible to accurately diagnose an abnormality such as a scratch on the spindle bearing of the bearing portion 303, for example.

Sixth Embodiment

Next, an abnormality diagnosis apparatus according to a sixth embodiment of the present invention will be described.

The sixth embodiment described below is an abnormality diagnosis apparatus incorporated in the dump truck 400 of Fig. 10. This embodiment is a variation of the fourth embodiment and is a variation of the second embodiment. In the following description, the same reference numerals are used for the same structures and processes as those in the second embodiment.

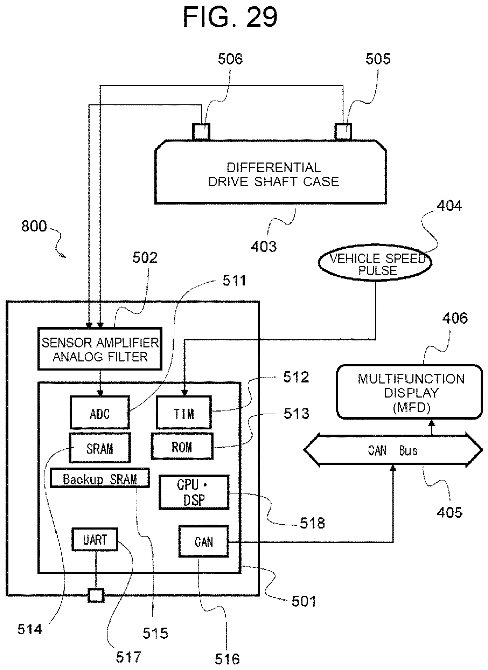

Fig. 29 is a diagram showing an abnormality diagnosis apparatus 800 incorporated in the dump truck 400 shown in Fig. 10.

The abnormality diagnosis apparatus 800 shown in Fig. 29 is, for example, an apparatus for performing diagnosis on a wheel bearing.

The abnormality diagnosis apparatus 800 includes two acceleration vibration sensors 505 and 506, and the two acceleration vibration sensors 505 and 506 are attached to the case 403 of the drive shaft to which the inner wheel of the wheel bearing is fixed, with the direction perpendicular to the rotation shaft of the bearing as the vibration detection direction. Of the two acceleration vibration sensors 505 and 506, one is the right rear wheel sensor 505 and the other is the left rear wheel sensor 506. Since the wheel bearing whose rotation axis extends in the left-right direction of the vehicle body is the target of diagnosis, the two acceleration vibration sensors 505 and 506 are arranged side by side in the left-right direction of the vehicle body at a distance from each other in the left-right direction.

The abnormality diagnosis apparatus 800 is mounted in the vehicle as a part of the function of the ECU (engine control unit). The abnormality diagnosis apparatus 800 includes a microcomputer 501 and an input circuit 502 including a sensor amplifier and an analog filter.

The microcomputer 501 includes an AD converter 511, a timer counter 512, a ROM 513, an SRAM 514, a backup SRAM 515, a CAN interface 516, a UART 517, and a processor 518.

The AD converter 511 receives the measurement signals of the two acceleration vibration sensors 505 and 506 via the input circuit 502 and samples the received measurement signals. Of the two measurement signals, one is used as the observation signal $d_k$ and the other is used as the reference signal $x_k$.

The timer counter 512, the CAN interface 516, the ROM 513, the processor 518, the SRAM 514, the backup SRAM 515, and the UART517 are the same as those described with reference to Fig. 11.

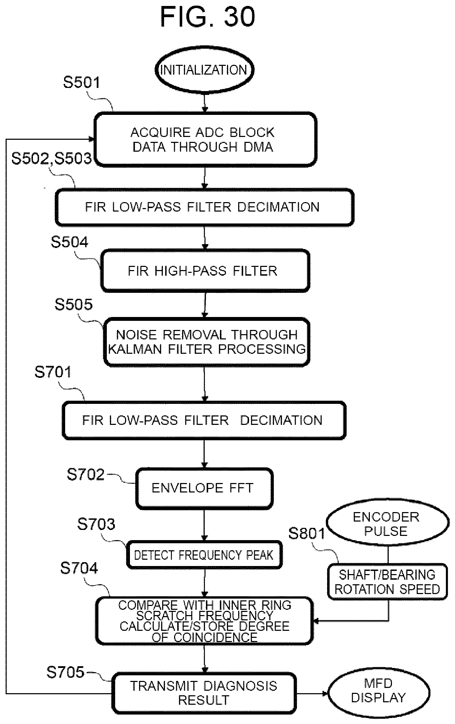

Fig. 30 is a flowchart showing the procedure of abnormality diagnosis in the abnormality diagnosis apparatus 800.

In the procedure for diagnosing the abnormality shown in the flowchart of Fig. 30 as well, the same procedure as in steps S501 to S505 of Fig. 22 is executed, and a residual signal in which the noise is canceled is calculated.

In the procedure of Fig. 30, after step S505, the residual signal is subjected to FIR low-pass filter processing and decimation in step S701. As a result, the number of processing points in the envelope FFT processing is reduced, and the processing calculation is lighter.

In step S702, the envelope FFT processing is executed, and in step S703, the peak as indicated by the arrow in graph 252 of Fig. 24B is detected and the peak frequency is obtained.

As step S801, which is performed in parallel with each of the above processes, the timer counter 512 counts the encoder pulse and the rotation speed of the shaft and the bearing is calculated.

In step S704, the peak frequency obtained in step S702 and the characteristic frequency of the inner ring scratch recognized based on the rotation speed calculated in step S801 are compared with each other, and the degree of coincidence is calculated and stored in the backup SRAM 515. The degree of coincidence calculated in this manner corresponds to the diagnosis result, and the degree of coincidence being high indicates that an abnormality such as an inner ring scratch has occurred.

In step S705, the diagnosis result is transmitted to and displayed on the multifunction display 406 via the CAN interface 516 and the CAN bus 405.

The processing of each step described above is repeatedly executed while the engine of the dump truck 400 is running. The driver or the like of the dump truck 400 can find out whether or not there is an abnormality in a bearing or the like by checking the display of the multifunction display 406.

Note that the fifth embodiment may also be applied to the sixth embodiment. That is, the Kalman filter of the sixth embodiment may be replaced with a normalized LMS. Also, the fifth embodiment may be applied to the first to third embodiments.

Although specific embodiments have been described above, the embodiments are merely exemplary and are not intended to limit the scope of the invention. The apparatuses and methods described herein can be embodied in forms other than those described above. Also, omissions, substitutions and modifications can be made to the above-described embodiments as appropriate without departing from the scope of the present invention. Such omissions, substitutions and modifications are included in the claims and equivalents thereof, and fall within the technical scope of the invention.

REFERENCE NUMERALS AND SYMBOLS

100: Abnormality diagnosis apparatus
101: Noise canceler
102: Sensor amplifier
103: Digital oscilloscope
104: Personal computer
105: Vibration acceleration sensor
111: Input circuit
112: DIP switch
113: One-chip microcomputer
114: RC filter
130: Adaptive filter
131: Kalman filter processing unit
132: Update unit
133: First estimation unit
134: Second estimation unit
200: Truck (Railway bogie)
201: Rail
202: Wheel
204: Bearing unit
300: Grinding machine
301: Motor
302: Rotary grindstone
303: Bearing portion
400: Dump truck
401: Vessel
402: Rear wheel
405: CAN bus
406: Multifunction display
500: Abnormality diagnosis apparatus
501: Microcomputer
502: Input circuit
505: Vibration acceleration sensor

**Claims**

1. A noise canceler comprising:

   a signal obtaining unit configured to obtain an observation signal obtained by sampling vibration of an apparatus;
   a signal delay unit configured to obtain a delay signal by delaying the observation signal obtained by the signal obtaining unit; and
   a Kalman filter processing unit configured to apply, to the observation signal and the delay signal, a Kalman filter that adapts a filter coefficient so as to reduce a residual signal between the observation signal and an estimated signal estimated based on the observation signal and the delay signal using an adaptive filter that incorporates the Kalman filter, and to output the residual signal.

2. The noise canceler according to claim 1, comprising a band-limiting unit configured to band-limit the observation signal and the delay signal from a lower limit frequency that removes a direct current signal component, to an upper limit frequency set to half or less of a sampling frequency.

3. The noise canceler according to claim 2, further comprising a down-conversion unit configured to convert the frequency of a signal band-limited by the band-limiting unit to a low frequency.

4. The noise canceler according to claim 3, wherein the down-conversion unit realizes down-conversion by performing complex multiplication between an input signal and a periodic signal having a frequency that corresponds to a conversion amount.

5. The noise canceler according to claim 4, wherein the down-conversion unit performs complex multiplication using pre-stored numerical value data that corresponds to the periodic signal.

6. The noise canceler according to any one of claims 1 to 5, further comprising an FFT processing unit configured to implement envelope FFT processing on the residual signal output from the Kalman filter processing unit.

7. The noise canceler according to any one of claims 1 to 6, wherein the Kalman filter processing unit uses the filter coefficient as a state vector and uses an identity matrix as a state transition matrix.

8. The noise canceler according to any one of claims 1 to 7, wherein the Kalman filter processing unit uses a variance matrix of system noise and a variance of observed noise in the Kalman filter as time-varying parameters and estimates the variance matrix and the variance in parallel with the adaptation of the filter coefficient.

9. An abnormality diagnosis apparatus comprising:

the noise canceler according to any one of claims 1 to 8; and
a diagnosis unit configured to diagnose whether or not there is an abnormality in the apparatus using the residual signal obtained by the noise canceler.

10. A noise canceling method comprising:

a signal obtaining step of obtaining an observation signal obtained by sampling vibration of an apparatus;
a signal delay step of obtaining a delay signal by delaying the observation signal obtained by the signal obtaining step; and
a Kalman filter processing step of applying, to the observation signal and the delay signal, a Kalman filter that adapts a filter coefficient so as to reduce a residual signal between the observation signal and an estimated signal estimated based on the observation signal and the delay signal using an adaptive filter that incorporates the Kalman filter, and outputting the residual signal.

11. A noise canceler comprising:

a signal obtaining unit configured to obtain measurement signals obtained by sampling vibration at a plurality of locations that are side by side in a direction along a rotation axis of a rotation apparatus, at a distance from each other in the direction;
a band-limiting unit configured to band-limit the measurement signals obtained by the signal obtaining unit, from a lower limit frequency that removes a direct current signal component, to an upper limit frequency set to half or less of a sampling frequency; and
an adaptive filter processing unit configured obtain an estimated signal by applying an adaptive filter to an observation signal that is one of the measured signals band-limited by the band-limiting unit and a reference signal that is another one of the measured signals, adapt a filter coefficient of the adaptive filter so as to reduce a residual signal between the observation signal and the estimated signal, and output the residual signal.

12. The noise canceler according to claim 11, further comprising an FFT processing unit configured to implement envelope FFT processing on the residual signal output from the adaptive filter processing unit.

13. The noise canceler according to claim 11 or 12, wherein the adaptive filter processing unit uses a Kalman filter as the adaptive filter.

14. The noise canceler according to claim 13, wherein the Kalman filter uses the filter coefficient as a state vector and uses an identity matrix as a state transition matrix.

15. The noise canceler according to claim 13 or 14, wherein the adaptive filter processing unit uses a variance matrix of system noise and a variance of observed noise in the Kalman filter as time-varying parameters and estimates the variance matrix and the variance in parallel with the adaptation of the filter coefficient.

16. The noise canceler according to claim 11 or 12, wherein the adaptive filter processing unit uses a normalized LMS as the adaptive filter.

17. An abnormality diagnosis apparatus comprising:

the noise canceler according to any one of claims 11 to 16; and
a diagnosis unit configured to diagnose whether or not there is an abnormality in the rotation apparatus using the residual signal obtained by the noise canceler.

18. A noise canceling method comprising:

a signal obtaining step of obtaining measurement signals obtained by sampling vibration at a plurality of locations that are side by side in a direction along a rotation axis of a rotation apparatus, at a distance from each other in the direction;
a band-limiting step of band-limiting the measurement signals obtained in the signal obtaining step, from a lower limit frequency that removes a direct current signal component, to an upper limit frequency set to half or less of a sampling frequency; and
an adaptive filter processing step of obtaining an estimation signal by applying an adaptive filter to an observation signal that is one of the measured signals band-limited in the band-limiting step and a reference signal that is another one of the measured signals, adapt a filter coefficient of the adaptive filter so as to reduce a residual signal between the observation signal and the estimation signal, and output the residual signal.

# FIG. 1A

# FIG. 1B

# FIG. 1C

200

105

204

100

SENSOR
AMPLIFIER — 102

NOISE CANCELER — 101

DIGITAL
OSCILLOSCOPE
(ENVELOPE FFT) — 103

PC

104

# FIG. 2

# FIG. 3

OBSERVATION
SIGNAL
dk

ek=dk-yk

-yk

DELAY
DEVICE

140

| dk |
| --- |
| ADAPTIVE FILTER  out |
| xk |

130

# FIG. 4

OBSERVATION
SIGNAL $\mathbf{d}_k$

DELAY
SIGNAL $\mathbf{d}_{k\text{-delay}}$

132

UPDATE
OBSERVATION
MATRIX $C_k$

130

KALMAN FILTER
PROCESSING

$\hat{R}_k$

$\hat{Q}_k$

131

KALMAN GAIN
$g_k$

ESTIMATE VARIANCE
MATRIX OF SYSTEM
NOISE

ESTIMATE
VARIANCE OF
OBSERVED NOISE

133

134

RESIDUAL
$e_k$

# FIG. 5

INITIALIZATION

S101

ACQUIRE ADC BLOCK DATA
THROUGH DMA

S102

SAMPLING FREQUENCY   36 kHz
CONVERT 12-BIT INTEGER TO
32-BIT FLOATING POINT NUMBER

S103

LOW-PASS FILTER   ORDER 50
DECIMATION
CONVERT SAMPLING FREQUENCY
FROM 36 kHz to 9 kHz

S104

HIGH-PASS FILTER
ORDER 17

S105

DELAY PROCESSING

S106

NOISE REMOVAL THROUGH
KALMAN FILTER PROCESSING

S107

OUTPUT BLOCK DATA TO
DAC THROUGH DMA
SAMPLING FREQUENCY 9 kHz

S108

ENVELOPE FFT
PC INPUT

## FIG. 6

```
                    INITIALIZATION

S101
        ┌──────────────────────────────┐
        │    ACQUIRE ADC BLOCK DATA     │
        │       THROUGH DMA             │
        └──────────────────────────────┘

S102
        ┌──────────────────────────────┐
        │  SAMPLING FREQUENCY  36 kHz   │
        │   CONVERT 12-BIT INTEGER TO   │
        │  32-BIT FLOATING POINT NUMBER │
        └──────────────────────────────┘

S103
        ┌──────────────────────────────┐
        │   LOW-PASS FILTER  ORDER 50   │
        │         DECIMATION            │
        │   CONVERT SAMPLING FREQUENCY  │
        │      FROM 36 kHz to 9 kHz     │
        └──────────────────────────────┘

S104
        ┌──────────────────────────────┐
        │  HIGH-PASS FILTER  ORDER 17   │
        └──────────────────────────────┘

S107
        ┌──────────────────────────────┐
        │    OUTPUT BLOCK DATA TO       │
        │    DAC THROUGH DMA            │
        │   SAMPLING FREQUENCY 9 kHz    │
        └──────────────────────────────┘

S108
        ┌──────────────────────────────┐
        │       ENVELOPE FFT            │
        │        PC INPUT               │
        └──────────────────────────────┘
```

# FIG. 7A

151
OBSERVATION
SIGNAL
152    152

AMPLITUDE

TIME

# FIG. 7B

ERROR SIGNAL
(RESIDUAL SIGNAL)
152    152

AMPLITUDE

TIME

# FIG. 8A

OBSERVATION
SIGNAL

# FIG. 8B

ERROR SIGNAL
(RESIDUAL SIGNAL)

# FIG. 9

FIG. 10

# FIG. 11

# FIG. 12

INITIALIZATION

S101

ACQUIRE ADC BLOCK
DATA THROUGH DMA

S102,S103

FIR LOW-PASS FILTER DECIMATION

S104

FIR HIGH-PASS FILTER

S105,S106

DELAY PROCESSING
NOISE REMOVAL THROUGH
KALMAN FILTER PROCESSING

S301

FIR LOW-PASS FILTER  DECIMATION

S302

ENVELOPE FFT

S303

DETECT FREQUENCY PEAK

S401

ENCODER
PULSE

SHAFT/BEARING
ROTATION SPEED

S304

COMPARE WITH INNER RING
SCRATCH FREQUENCY
CALCULATE AND STORE DEGREE
OF COINCIDENCE

S305

TRANSMIT DIAGNOSIS
RESULT

MFD
DISPLAY

# FIG. 13

S101

ACQUIRE ADC BLOCK
DATA THROUGH DMA

S401

SAMPLING FREQUENCY  24 kHz
CONVERT 12-BIT INTEGER TO
32-BIT FLOATING POINT NUMBER

S402

FIR LOW-PASS FILTER
DECIMATION (1/2)
CONVERT SAMPLING FREQUENCY TO 12 kHz

S403

BAND-PASS FILTER
(1.7 kHz TO 3 kHz)
FIR FILTER

S404

FREQUENCY CONVERSION (-1.5 kHz) USING
FIR HILBERT TRANSFORM FILTER/COMPLEX
MULTIPLICATION

S405

DECIMATION (1/4)
SAMPLING FREQUENCY 3 kHz

S105

DELAY PROCESSING

S106

NOISE REMOVAL THROUGH
KALMAN FILTER PROCESSING

## FIG. 14A

## FIG. 14B

FIG. 15A

FIG. 15B

# FIG. 16

INPUT SIGNAL $dk$ → DELAY → REAL PART $drk$

FIR HILBERT TRANSFORM FILTER → IMAGINARY PART $dik$

DIGITAL RESONATOR $zk$ → DELAY → REAL PART $zrk$

FREQUENCY f0

FIR HILBERT TRANSFORM FILTER → IMAGINARY PART $zik$

OUTPUT SIGNAL $Dk$ (REAL PART)

# FIG. 17A

INPUT SIGNAL $d_k$

DELAY

REAL PART $dr_k$

FIR HILBERT TRANSFORM FILTER

IMAGINARY PART $di_k$

cos(k)

⊗

sin(k)

⊗

+ +

○

OUTPUT SIGNAL $D_k$ (REAL PART)

# FIG. 17B

| k | 0 | 1 | 2 | 3 | 4 | 5 | 6 | 7 | 8 |
|------|---|-----------|---|------------|----|------------|----|------------|---|
| sin | 0 | 0.7071068 | 1 | 0.7071068 | 0 | -0.7071068 | -1 | -0.7071068 | 0 |
| cos | 1 | 0.7071068 | 0 | -0.7071068 | -1 | -0.7071068 | 0 | 0.7071068 | 1 |

# FIG. 18A

# FIG. 18B

# FIG. 19

# FIG. 20

DESIRED SIGNAL
sk

NOISE SOURCE
xk

UNKNOWN TRANSMISSION PATH {hi}

OBSERVATION SIGNAL
dk

$ek=dk -yk$

-yk

REFERENCE SIGNAL
xk

dk
xk
ADAPTIVE FILTER (ESTIMATION PATH) out

150

EP 4 095 497 A1

# FIG. 21

OBSERVATION SIGNAL $d_k$    REFERENCE SIGNAL $x_k$

132

UPDATE OBSERVATION MATRIX $C_k$

150

KALMAN FILTER PROCESSING

$\hat{R}_k$

$\hat{Q}_k$

131

KALMAN GAIN $g_k$

ESTIMATE VARIANCE MATRIX OF SYSTEM NOISE

ESTIMATE VARIANCE OF OBSERVED NOISE

133    134

RESIDUAL

$e_k$

# FIG. 22

INITIALIZATION

S501

ACQUIRE ADC BLOCK DATA
THROUGH DMA

S502

SAMPLING FREQUENCY  36 kHz
CONVERT 12-BIT INTEGER TO
32-BIT FLOATING POINT NUMBER

S503

LOW-PASS FILTER  ORDER 50
DECIMATION
CONVERT SAMPLING FREQUENCY
FROM 36 kHz TO 9 kHz

S504

HIGH-PASS FILTER  ORDER 60

S505

NOISE REMOVAL THROUGH
KALMAN FILTER PROCESSING

S506

OUTPUT BLOCK DATA TO DAC
THROUGH DMA
SAMPLING FREQUENCY 9 kHz

S507

ENVELOPE FFT
PC INPUT

# FIG. 23

INITIALIZATION

S501

ACQUIRE ADC BLOCK DATA
THROUGH DMA

S502

SAMPLING FREQUENCY  36 kHz
CONVERT 12-BIT INTEGER TO
32-BIT FLOATING POINT NUMBER

S503

LOW-PASS FILTER  ORDER 50
DECIMATION
CONVERT SAMPLING FREQUENCY
FROM 36 kHz TO 9 kHz

S504

HIGH-PASS FILTER  ORDER 60

S506

OUTPUT BLOCK DATA TO DAC
THROUGH DMA
SAMPLING FREQUENCY 9 kHz

S507

ENVELOPE FFT
PC INPUT

# FIG. 24A

REFERENCE
SIGNAL

251

AMPLITUDE

TIME

# FIG. 24B

251

OBSERVATION
SIGNAL

252        252

AMPLITUDE

TIME

# FIG. 24C

**ERROR SIGNAL
(RESIDUAL SIGNAL)**

# FIG. 25A

OBSERVATION SIGNAL

# FIG. 25B

ERROR SIGNAL
(RESIDUAL SIGNAL)

# FIG. 26

INITIALIZATION

S501
ACQUIRE ADC BLOCK DATA
THROUGH DMA

S502
SAMPLING FREQUENCY 36 kHz
CONVERT 12-BIT INTEGER TO
32-BIT FLOATING POINT NUMBER

S503
LOW-PASS FILTER ORDER 50
DECIMATION
CONVERT SAMPLING FREQUENCY
FROM 36 kHz TO 9 kHz

S504
HIGH-PASS FILTER ORDER 60

S601
NOISE REMOVAL USING
NLMS ALGORITHM

S506
OUTPUT BLOCK DATA TO DAC
THROUGH DMA
SAMPLING FREQUENCY 9 kHz

S507
ENVELOPE FFT
PC INPUT

# FIG. 27A

OBSERVATION SIGNAL

# FIG. 27B

ERROR SIGNAL
(RESIDUAL SIGNAL)

# FIG. 28

SENSOR AMPLIFIER

NOISE CANCELER

DIGITAL OSCILLOSCOPE (ENVELOPE FFT)

PC

# FIG. 29

# FIG. 30

INITIALIZATION

S501 — ACQUIRE ADC BLOCK DATA THROUGH DMA

S502, S503 — FIR LOW-PASS FILTER DECIMATION

S504 — FIR HIGH-PASS FILTER

S505 — NOISE REMOVAL THROUGH KALMAN FILTER PROCESSING

S701 — FIR LOW-PASS FILTER DECIMATION

S702 — ENVELOPE FFT

S703 — DETECT FREQUENCY PEAK

S801 — ENCODER PULSE

SHAFT/BEARING ROTATION SPEED

S704 — COMPARE WITH INNER RING SCRATCH FREQUENCY CALCULATE/STORE DEGREE OF COINCIDENCE

S705 — TRANSMIT DIAGNOSIS RESULT

MFD DISPLAY

## INTERNATIONAL SEARCH REPORT

International application No.

PCT/JP2021/001523

### A. CLASSIFICATION OF SUBJECT MATTER

G01H 17/00(2006.01)i; G01M 99/00(2011.01)i; G01M 13/04(2019.01)i; G01M 13/045(2019.01)i
FI: G01M13/04; G01H17/00 D; G01H17/00 A; G01M13/045; G01M99/00 A

According to International Patent Classification (IPC) or to both national classification and IPC

### B. FIELDS SEARCHED

Minimum documentation searched (classification system followed by classification symbols)

G01H17/00; G01M99/00; G01M13/04; G01M13/045

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2018-128467 A (SEIKO EPSON CORP.) 16 August 2018 (2018-08-16) paragraphs [0028]-[0077], fig. 1-3 | 1-3, 10 |
| Y | paragraphs [0028]-[0077], fig. 1-3 | 4-9, 11-18 |
| Y | JP 2013-201495 A (FUJITSU LTD.) 03 October 2013 (2013-10-03) paragraphs [0036]-[0037], fig. 10-11 | 4-9 |
| Y | JP 2017-32467 A (NSK LTD.) 09 February 2017 (2017-02-09) paragraphs [0011]-[0021], [0102], fig. 1-2 | 9, 11-18 |

☐ Further documents are listed in the continuation of Box C.   ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 March 2021 (12.03.2021) | 23 March 2021 (23.03.2021) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

Information on patent family members

| International application No. |
| --- |
| PCT/JP2021/001523 |

| Patent Documents referred in the Report | Publication Date | Patent Family | Publication Date |
| --- | --- | --- | --- |
| JP 2018-128467 A | 16 Aug. 2018 | (Family: none) | |
| JP 2013-201495 A | 03 Oct. 2013 | US 2013/0251365 A1 paragraphs [0049]-[0050], fig. 10-11 GB 2500745 A CN 103326777 A | |
| JP 2017-32467 A | 09 Feb. 2017 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11271181 A
- JP 2010234403 A
- JP 2007278894 A
- JP 2008164578 A